# EUROPÄISCHE PATENTANMELDUNG

(11) **EP 2 067 425 A1**
(43) Veröffentlichungstag der Anmeldung: **10.06.2009**
(21) Anmeldenummer: 08450191.5
(22) Anmeldetag: 05.12.2008
(51) Int. Cl.: A47J 37/06

(54) **Gitterrost**

(30) Priorität: 05.12.2007 AT 19772007
(71) Anmelder: Gschwind, Ernst, 8511 St. Stefan (AT)
(72) Erfinder: Gschwind, Ernst, 8511 St. Stefan (AT)
(74) Vertreter: Gibler & Poth Patentanwälte OEG

(57) **Zusammenfassung**

Gitterrost (1) umfassend mehrere Stabelemente (16), welche beabstandet, parallel und in einer Ebene eine Auflagefläche (11) für Grillgut ergeben, wird, zur Verringerung der Entstehung krebserregender Stoffe beim Grillen bei gleichzeitig gleichmäßiger Erhitzung des Grillgutes von unten vorgeschlagen, dass an der der Auflagefläche (11) gegenüberliegenden Seite wenigstens eine Abtropfplatte (2) angeordnet ist, und dass die wenigstens eine Abtropfplatte (2) an zumindest einer freien Längskante (22) eine Vielzahl von Abtropfbereichen (23) aufweist, wobei die Abtropfbereiche (23) im Betrieb ein gezieltes Abtropfen von aus Grillgut ablaufendem Fluid in dem jeweiligen Abtropfbereich (23) bewirken.

## Beschreibung

Die Erfindung betrifft einen Gitterrost umfassend mehrere Stabelemente, welche beabstandet, parallel und in einer Ebene eine Auflagefläche für Grillgut ergeben.

Grillgeräte mit Gitterrost sind in vielen Ausführungsformen und Größen bekannt und die Beliebtheit für derartige Grillgeräte ist ungebrochen. Ebenfalls sind unterschiedliche Ausführungsformen des Heizmittels bekannt. Es sind dies beim Holzkohlegrill Holzkohle, beim Elektrogrill Strom oder beim Gasgrill ein oder mehrere Brenner. Die vom Heizmittel erzeugte heiße Luft strömt von unten durch den Gitterrost und das Grillgut wird durch die heiße Luft und die heiße Auflagefläche des Gitterrostes von unten erhitzt. Dabei tropfen vom Grillgut ablaufende Fluide, umfassend Fette, Marinade, Fleischsaft und Wasser, auch auf das Heizmittel, wo diese Flüssigkeiten teilweise verbrennen. Es entstehen Flammen, Rauch und gesundheitsschädliche aromatische Kohlenwasserstoffe, welche teilweise ins Grillgut übergehen und als krebserregend gelten.

Zunehmend wird darauf geachtet, dass die Entstehung krebserregender Stoffe beim Grillen verhindert wird. So sind Grillanordnungen bekannt, welche ein Entstehen weitgehend verhindern sollen. Beispielsweise sind Grillgeräte bekannt, bei welchen die Glut seitlich zum Grillgut angeordnet ist und somit weniger Fluid auf die Glut tropft. Ebenso finden immer wieder Aluminiumgrillschalen Verwendung, welche vom Grillgut ablaufendes Fluid auffangen sollen. Weiters sind Grillroste mit Ablaufrinnen bekannt, welche ablaufendes Fluid vom Heizmittel wegleiten sollen. Alle diese Ausführungsformen haben aber den Nachteil, dass konstruktionsbedingt ein Teil der abtropfenden Flüssigkeit mit dem Heizmittel in Berührung kommt und somit trotzdem, mehr oder weniger ausgeprägt, krebserregende Kohlenwasserstoffe entstehen. Ein weiterer Nachteil ist, dass dadurch die Bedienung des Grillgerätes aufwendiger wird und oftmals, bei der Verwendung von Grillschalen beispielsweise, mehr Abfall entsteht.

Es ist die Aufgabe der vorliegenden Erfindung, eine Möglichkeit zu schaffen, die genannten Nachteile zu verhindern, das Grillgut gleichmäßig von unten zu erhitzen und konstante Grillergebnisse zu ermöglichen.

Diese Aufgabe wird dadurch gelöst, dass an der Auflagefläche gegenüberliegenden Seite wenigstens eine Abtropfplatte angeordnet ist, und dass die wenigstens eine Abtropfplatte an zumindest einer freien Längskante eine Vielzahl von Abtropfbereichen aufweist, wobei die Abtropfbereiche im Betrieb ein gezieltes Abtropfen von aus Grillgut ablaufendem Fluid entlang des Abtropfbereiches bewirken.

Durch die Vielzahl von Abtropfbereichen kann ein Entlanglaufen der vom Grillgut ablaufenden Fluide über weite Strecken der Längskante der Abtropfplatte verhindert werden. Die Fluide können gezielt in die Abtropfbereiche gelenkt werden, wo die Fluide kontrolliert abtropfen. Die Abtropfplatten, welche auch dünnwandig und flächig ausgebildet sein können, können eine gleichmäßige Wärmeverteilung im Grillrost unterstützen und somit kann die gleichmäßige Erhitzung des Grillguts unterstützt werden. Die Abtropfplatten behindern das Durchströmen der heißen Luft nicht, so dass die Effizienz des Grillgerätes, im Gegensatz beispielsweise zu Grillschalen, nicht verringert wird. Die Abtropfplatten können auch derart ausgebildet sein, dass sie den Luftstrom gezielt beeinflussen und somit eine gleichmäßige Temperaturverteilung der Auflagefläche weiter unterstützen.

In diesem Zusammenhang kann in Weiterbildung der Erfindung vorgesehen sein, dass zumindest eine Abtropfplatte mittels eines Verbindungsmittels lösbar an der der Auflagefläche gegenüberliegenden Seite angeordnet ist. Dadurch kann in vorteilhafter Weise die einfache Reinigung der Einzelteile des Gitterrostes sichergestellt werden und ebenfalls kann ein Austausch einzelner Elemente im Schadensfall gewährleistet werden.

In vorteilhafter Weiterbildung der Erfindung kann vorgesehen sein, dass zumindest eine Abtropfplatte einstückig mit der der Auflagefläche gegenüberliegenden Seite ausgebildet ist. Dadurch wird die Montage erleichtert und die Anzahl von Einzelteilen des Gitterrostes, insbesondere wenn der gesamte Gitterrost einstückig ausgebildet ist, kann gering gehalten werden.

Weiters kann vorgesehen sein, dass die freie Längskante der Abtropfplatte zwischen den Abtropfbereichen Vertiefungen aufweist. Dadurch können die Fluide bereichsweise in die Abtropfbereiche gelenkt werden und das kontrollierte Abtropfen der Fluide wird weiter verbessert.

Eine Variante der Erfindung kann darin bestehen, dass die freie Längskante mit einer zickzackförmigen, wellenförmigen oder periodischen Profilierung ausgebildet ist. Dies erlaubt in besonders vorteilhafter Weise die Ausgestaltung eines gleichförmigen Profils, welches über die gesamte Längskante das Entlanglaufen des Fluides verhindert. Dabei wird durch die periodische Profilierung die Abtropfplatte entlang seiner Längskante in mehrere Einheiten aufgeteilt, welche jede für sich einen Abtropfbereich und eine Vertiefung aufweisen. Eine maximale Lauflänge des Fluides entlang der Längskante kann auf ein Minimum verkürzt und die Kontrollierbarkeit des Fluides kann weiter gesteigert werden. Wenn die Abtropfplatte aus Stanzteilen einer Blechplatte hergestellt wird, kann eine Vertiefung der einen Abtropfplatte gleichzeitig einen Abtropfbereich einer weiteren Abtropfplatte erzeugen und dabei praktisch reststofffrei gestanzt werden. Somit ist bei Abtropfplatten aus Blechstanzteilen eine reststoffarme und kostengünstige Fertigung möglich.

In Weiterführung der Erfindung kann sich die Abtropfplatte im Wesentlichen über die gesamte Länge des Gitterrostes erstrecken. Damit kann sichergestellt werden, dass über die gesamte Länge des Gitterrostes ein kontrolliertes Ablaufen des Fluides gewährleistet ist. Dies ist besonders günstig, wenn sich das unter dem Gitterrost liegende Heizelement über die gesamte Länge des Gitterrostes erstreckt, was oftmals der Fall sein kann, da eine derartige Anordnung des Heizmittels eine gleichmäßige Wärmeverteilung am Gitterrost begünstigt.

Eine Variante der Erfindung kann darin bestehen, dass die Fläche der Abtropfplatte eine Strukturierung, vorzugsweise Riffelung, aufweist. Dadurch kann ein Längslaufen des vom Grillgut ablaufenden Fluides entlang der Abtropfplatte weiter eingeschränkt werden und ein schnellstmögliches Abtropfen am nächstliegenden Abtropfbereich kann weiter unterstützt werden. Darüber hinaus vergrößert eine Riffelung die Oberfläche der Abtropfplatte. Dies kann die gleichmäßige Temperaturverteilung des Gitterrostes auf der Auflagefläche unterstützen, da eine vergrößerte Oberfläche der Abtropfplatte die Wärme der vorbeiströmenden heißen Luft besser aufnimmt und durch Wärmeleitung diese Wärme gleichmäßig an den Gitterrost weiterleitet wird.

In weiterer Ausgestaltung der Erfindung kann vorgesehen sein, dass die Abtropfplatte lösbar in einem Rahmen befestigt ist. Durch die lösbare Verbindung kann der an sich voluminöse Gitterrost-Abtropfplatten-Verbund in kleine Einheiten geteilt werden, welche in vorteilhafter Weise die einfache Reinigung von Gitterrost und Abtropfplatte, beispielsweise in einem Geschirrspüler, erleichtern. Es ergibt sich weiters auch die Möglichkeit den Gitterrost alleine zu reinigen. Beispielsweise wenn für den Verwendungszweck der nicht direkt mit dem Grillgut in Kontakt stehenden Abtropfplatte eine Reinigung als nicht notwenig erscheint.

Gemäß einer weiteren Ausbildung der Erfindung kann vorgesehen sein, dass wenigstens eine zur Auflagefläche offene Rinne angeordnet ist, und dass die Rinne Durchtrittsöffnungen aufweist. Durch eine zur Auflagefläche offene Rinne ist sichergestellt, dass bereits im Gitterrost ein kontrolliertes Abfließen von aus dem Grillgut ablaufendem Fluid beginnt. Die Durchtrittsöffnungen leiten das Fluid dann gezielt auf die Abtropfplatten über, wo ein Abtropfen des Fluides in den Abtropfbereichen sichergestellt ist. Im Bereich der Durchtrittsöffnungen herrscht zwischen dem Fluid und dem heißen Gitterrost ein besonders guter Kontakt. Dies bewirkt in vorteilhafter Weise ein Verdampfen des Wasseranteiles des Fluides und damit einhergehend ein explodieren des Fluidtropfens. Durch das frühzeitige Verdampfen des Wasseranteiles und damit einhergehend das Explodieren des Fluidtropfens im Bereich des Gitterrostes wird ein unkontrolliertes Explodieren des Tropfens im Raum zwischen Gitterrost und Brenner verhindert. Seitlich wegspritzende Tröpfchen werden bereits vom Gitterrost oder von den Abtropfplatten aufgefangen und können somit nicht in Kontakt mit dem Brenner gelangen. Die Rinne kann in vorteilhafter Weise die von den Abtropfplatten aufgenommene Wärme zur Auflagefläche weiterleiten und dabei eine möglichst homogene Wärmeverteilung auf der Auflagefläche zu unterstützen.

In diesem Zusammenhang kann vorgesehen sein, dass die Abtropfplatte und die Rinne einstückig ausgebildet sind. Dadurch kann in vorteilhafter Weise die einfache Reinigung der Rinne und Abtropfplatte des Gitterrostes sichergestellt werden und ebenfalls kann ein Austausch dieser Einzelteile des Gitterrostes im Schadensfall gewährleistet werden.

Gemäß einer anderen Ausführungsform der Erfindung kann vorgesehen sein, dass sämtliche Rinnen und sämtliche Abtropfplatten, insbesondere der Gitterrost als Ganzes, einstückig ausgebildet sind. Dadurch wird die Montage erleichtert und die Anzahl von Einzelteilen des Gitterrostes kann gering gehalten werden, was besonders für einen kleinen Gitterrost, beispielsweise für den Privatgebrauch, vorteilhaft sein kann.

In vorteilhafter Weiterführung der Erfindung können die Durchtrittsöffnungen als Querschlitze ausgebildet sein. Dadurch kann in vorteilhafter Weise die Gefahr eines Verstopfens der Durchtrittsöffnungen verringert werden. Ebenso kann heiße Luft durch die Querschlitze durchtreten. Da somit an allen Stellen der Auflagefläche heiße Luft direkt zum Grillgut strömen kann, so kann die Wärmeverteilung der Auflagefläche noch homogener dargestellt werden.

In Weiterführung der Erfindung können die Längskanten der Rinne verstärkt ausgebildet sein und einen Teil der Auflagefläche ausbilden. Durch verstärkte Längskanten ist eine besonders sichere Auflage des Grillguts gewährleistet. Damit verbunden ist auch eine gute Wärmeübertragung vom Gitterrost auf das Grillgut und auch auf das aus dem Grillgut ablaufende Fluid. Fluidtropfen können dabei beim Verdampfen des Wasseranteiles bereits im Bereich der Auflagefläche explodieren und somit wird die Explosion des Tropfens im Raum zwischen Grillrost und Brenner verhindert. Ebenfalls beeinflusst die Auflagefläche die optische Erscheinung des fertigen Grillgutes und bekanntlich vermittelt ein gleichmäßiges, dunkelbraunes Grillrostmuster am fertigen Grillgut einen hochwertigen Eindruck des Grillguts und der Grillkunst und in vorteilhafter Weise können verstärkt ausgebildete Längskanten diesen optischen Eindruck erzielen.

In Weiterbildung der Erfindung kann die Abtropfplatte - in Gebrauchslage gesehen - als dachförmiges Element ausgebildet sein. Dadurch kann eine gezielte Abschirmung des Heizmittels in Bereichen, wo dies notwendig ist, erfolgen. Darüber hinaus kann mit einer dachförmigen Ausbildung der Abtropfplatte der Strom der heißen Luft gezielt gesteuert werden und damit auch die Temperaturverteilung im Bereich der Auflagefläche des Grillgutes beeinflusst werden. Eine homogene Wärmeverteilung im Bereich der Auflagefläche kann, bei geeigneter Ausbildung des dachförmigen Elementes, auch bei einer, aufgrund eines außermittig angeordneten Heizelementes, ansonsten möglicherweise inhomogenen Wärmeverteilung erzielt werden. Inhomogenitäten in der Wärmeverteilung können somit in vorteilhafter Weise weiter verringert werden.

In diesem Zusammenhang kann vorgesehen sein, dass das dachförmige Element zwischen zwei einen Teil der Auflagefläche ausbildenden Stabelementen angeordnet ist. Dabei kann das dachförmige Element beispielsweise in den dafür geeigneten Gitterrost eingeclipst werden. Diese vorteilhafte Anordnung des dachförmigen Elementes ermöglicht eine besonders einfache Montage und Demontage des dachförmigen Elementes am Gitterrost.

In weiterer Ausgestaltung der Erfindung kann vorgesehen sein, dass das dachförmige Element asymmetrisch ausgebildet ist. Diese Ausbildung des dachförmigen Elementes kann in besonders vorteilhafter Weise, in Kombination und in Abstimmung mit weiteren zum Grill gehörenden Baugruppen, eine über die gesamte Auflagefläche homogene Durchströmung des Grillrostes erzielen. Inhomogenitäten, wie sie durch Abschirmung oder durch außermittig angeordnete Heizelemente auftreten würden, können mit einer derartigen Ausgestaltung ausgeglichen werden.

In Weiterführung der Erfindung kann die Abtropfplatte aus hitzebeständigem Material, vorzugsweise aus Metall, insbesondere Stahl oder Leichtmetall, beispielsweise Aluminium oder einer Aluminiumlegierung, aufgebaut sein. Damit ist eine Langlebigkeit der Abtropfplatte sichergestellt, obwohl - vor allem auf der dem Heizmittel zugewandten Seite - hohe Temperaturen im Grillgerät erreicht werden können. Vorteilhaft wirkt sich auch die hohe Wärmeleitfähigkeit der Abtropfplatte bei der Verwendung von Metall auf die Temperaturverteilung der Auflagefläche aus, da die Wärme gleichmäßiger auf die gesamte Auflagefläche verteilt werden kann.

In Weiterführung der Erfindung kann die Abtropfplatte als Stanzteil, Pressteil, Walzteil, als Gussteil, insbesondere als Stahlguss, oder als Druckguss, insbesondere Aluminum- oder Aluminiumlegierungsdruckguss, ausgebildet sein. In vorteilhafter Weise können unterschiedliche Herstellmethoden miteinander kombiniert werden und/oder es kann eine für die Anwendung und den Aufbau besonders geeignete Herstellmethode für die Abtropfplatte ausgewählt werden.

Gemäß einer anderen Ausführungsform der Erfindung kann vorgesehen sein, dass die Abtropfplatte aus einem Material, mit einer zu jener der Stabelemente unterschiedlichen Wärmeleitfähigkeit, vorzugsweise einer höheren, besteht. Diese Ausführungsform der Erfindung kann die homogene Temperaturverteilung über die gesamte Auflagefläche weiter erhöhen und somit können auf der gesamten Auflagefläche gleichmäßige Grillergebnisse erzielt werden. Die Bedienung eines derartigen Grillgerätes wird insgesamt einfacher, da bei der Belegung der Auflagefläche mit Grillgut keine besondere Temperaturverteilung berücksichtigt werden muss.

Gemäß wieder einer anderen Ausführungsform der Erfindung kann vorgesehen sein, dass der Gitterrost als Gussrost, vorzugsweise als Eisenguss, Stahlguss oder Aluminiumguss, ausgebildet ist. Die Ausführung als Gussrost ermöglicht eine einfache und günstige Herstellung des Gitterrostes, insbesondere bei höheren Stückzahlen, bei gleichzeitig hoher Designfreiheit. Aufgrund der hochwertigen Optik und der vorteilhaften Grilleigenschaften eines Gussrostes wird ein solcher auch vom Verbraucher geschätzt.

Gemäß wieder einer anderen Ausbildung der Erfindung kann die Auflagefläche von einem Begrenzungselement berandet sein, wobei das Begrenzungselement im Betrieb einen Kontakt von Grillgut mit den Wänden eines Grillgerätes vermeidet. Damit ist sichergestellt, dass das Grillgut nicht mit den schwer - oder nicht - zu reinigenden Wänden des Grillgerätes in Kontakt kommen kann. Die Begrenzungselemente können wie der Gitterrost gereinigt werden und können somit bei jeder neuen Verwendung des Grillgerätes in für die Lebensmittelzubereitung geeigneter gereinigter Form vorbereitet werden.

In diesem Zusammenhang kann vorgesehen sein, dass das Begrenzungselement zumindest bereichsweise als Geländer, vorzugsweise mit weiteren Stabelementen, ausgebildet ist. Dies ermöglicht eine besonders einfache Ausgestaltung des Begrenzungselementes bei einem Gitterrost, und das Begrenzungselement ermöglicht eine einfache Handhabung und Platzierung des Gitterrostes im Grillgerät.

Weiters kann vorgesehen sein, dass das Begrenzungselement zumindest bereichsweise als Wandung, vorzugsweise mit Begrenzungsblechen, ausgebildet ist. Dadurch wird selbst für kleines und flaches Grillgut, beispielsweise Fleisch oder Gemüse in Scheiben, ein Überragen der Auflagefläche verhindert und es kann wirkungsvoll der Kontakt von Grillgut und der Innenseite der Außenwand verhindert werden.

In weiterer Ausbildung der Erfindung kann vorgesehen sein, dass die Schnittkante der Schenkel des zumindest einen dachförmigen Elementes aus der Ebene der Stabelemente hervorragt. Dadurch kann die Auflagefläche des Gitterrostes in einfacher Weise in mehrere Bereiche unterteilt werden. In vorteilhafter Weise kann somit die Grillfläche besser strukturiert werden, um beispielsweise Grillgut unterschiedlicher Gardauer oder unterschiedlicher Aufliegedauer zu trennen. Bei geeigneter Ausgestaltung des Heizmittels können auch Zonen unterschiedlicher Grilltemperatur ausgebildet und von den Schnittkanten der Schenkel voneinander getrennt werden. Eine derartige Ausbildung der Erfindung kann somit die Einsatzflexibilität des Grillgerätes erhöhen.

Eine Variante der Erfindung kann darin bestehen, dass die Stabelemente und/oder die weiteren Stabelemente aus hitzebeständigem Material, vorzugsweise aus Metall, insbesondere Stahl oder Leichtmetall, beispielsweise Aluminium oder einer Aluminiumlegierung, aufgebaut sind. Damit wird die Langlebigkeit der Stabelemente sichergestellt, wobei auch die einfache Reinigung und/oder die Spülmaschinenfestigkeit sichergestellt werden kann.

Weiters kann vorgesehen sein, dass die Stabelemente und/oder die weiteren Stabelemente als Stanzteil, Pressteil, Walzteil, als Gussteil, insbesondere als Stahlguss, oder als Druckguss, insbesondere Aluminum- oder Aluminiumlegierungsdruckguss, ausgebildet sind. Es kann eine für die Anwendung und den Aufbau besonders geeignete Herstellmethode für die Abtropfplatte ausgewählt werden. Unterschiedliche Herstellmethoden der Stabelemente und/oder die weiteren Stabelemente können in vorteilhafter Weise miteinander kombiniert werden.

In vorteilhafter Weiterbildung der Erfindung können am Rand des Gitterrostes Vorsprünge ausgebildet sein, welche in Verwendung des Gitterrostes einen vorbestimmten Abstand zu einer Wand eines Grillgerätes sicherstellen. Durch einen Abstand zur Wand des Grillgerätes kann einerseits sichergestellt werden, dass kein unbeabsichtigter Kontakt von Grillgut und der Wand des Grillgerätes passiert und andererseits können Wandeffekte, beispielsweise stellenweise Überhitzung, vermieden werden.

Die Erfindung betrifft weiters ein Grillgerät mit einem erfindungsgemäßen Gitterrost. Der erfindungsgemäße Gitterrost kann in Verbindung mit dem Grillgerät gleichmäßige Grillergebnisse ermöglichen, wobei gleichzeitig die Belastungen durch krebserregende aromatische Kohlenwasserstoffe, wie sie beim Verbrennen von fetthaltigen Fluiden auf heißer Glut oder Ähnlichem entstehen, vermieden wird.

In diesem Zusammenhang kann das Grillgerät zumindest eine Ablaufrinne aufweisen, und die zumindest eine Ablaufrinne - in Betriebslage gesehen - unter der freien Längskante der wenigstens einen Abtropfplatte angeordnet sein. Durch die Ablaufrinne ist sichergestellt, dass über dem Heizmittel abtropfende Fluide abgeleitet werden. Die Fluide können am niedrigeren Ende der Ablaufrinne gesammelt und einer Verwertung zugeführt werden. Die Ablaufrinne bietet in vorteilhafter Weise einen zusätzlichen Schutz gegen ein Tropfen von Fluiden auf das heiße Heizmittel.

In weiterer Ausgestaltung der Erfindung kann vorgesehen sein, dass zumindest ein Brenner vorgesehen ist. Das Grillen mit einem Grillgerät, welches mit zumindest einem Brenner ausgerüstet ist, ist besonders angenehm. Der Brenner erzeugt mehr Heizleistung als ein Elektrogrill, der Geschmack kommt dem eines Holzkohlgrills näher und gleichzeitig ist die Bedienung und die Temperatursteuerung einfacher als die eines Holzkohlengrills.

In diesem Zusammenhang kann in Weiterbildung der Erfindung vorgesehen sein, dass der Brenner - in Betriebslage gesehen - unterhalb der Ablaufrinne angeordnet ist. Durch diese Anordnung der Ablaufrinne und des Brenners ist sichergestellt, dass über dem Brenner abtropfende Fluide kontrolliert abfließen und nicht mit dem Brenner in Berührung kommen. Der Brenner, welcher oft als stabförmiges Element ausgestaltet ist, kann somit gezielt von den vom Grillgut abtropfendem Fluid geschützt werden und ein Grillen ohne gesundheitliche Bedenken kann ermöglicht werden.

In Weiterführung der Erfindung kann vorgesehen sein, dass der Brenner - in Betriebslage gesehen - senkrecht unterhalb des dachförmigen Elementes angeordnet ist und die freien Längskanten des dachförmigen Elementes parallel zur Längserstreckung des Brenners angeordnet sind, wobei der Bereich senkrecht oberhalb des Brenners frei von Abtropfbereichen ausgebildet ist. Ein stabförmiges Heizelement und eine gegebenenfalls darüber angeordnete Ablaufrinne erzeugen inhomogene Temperaturverteilungen im Raum zwischen Grillrost und Heizelement. Mit dem - in Betriebslage gesehen - oberhalb des Brenners angeordneten dachförmigen Elementen können diese Inhomogenitäten ausgeglichen werden. Dies kann in vorteilhafter Weise eine homogene Wärmeverteilung auf der Auflagefläche ermöglichen. Als weiterer Vorteil kann das dachförmige Element als Schutz des Brenners von Fluid dienen und somit die Ablaufrinne gänzlich ersetzen. Damit ergeben sich unterschiedliche Ausgestaltungsmöglichkeiten von verschiedenen Grillgerätgrößen, passend für Einsatzzwecke zwischen Einfamiliengrill und gewerblichem Grillgerät für Restaurants, Gaststätten und Festveranstaltungen.

Eine vorteilhafte Variante der Erfindung kann darin bestehen, dass das dachförmige Element mittig oberhalb des Brenners angeordnet und breiter als der Brenner ausgebildet ist, wobei die Abtropfbereiche des dachförmigen Elementes den Brenner beidseitig überragen, wobei im Betrieb ein Abtropfen von aus Grillgut ablaufendem Fluid von den Abtropfbereichen des dachförmigen Elementes am Brenner vorbei erfolgt. Dadurch kann im Betrieb der Kontakt von abtropfendem Fluid und Brenner auch ohne Ablaufrinne verhindert werden.

Eine Variante der Erfindung kann darin bestehen, dass - in Betriebslage gesehen - unterhalb des Brenners ein Abschirmelement angeordnet ist. Diese weitere Ablaufrinne verhindert den Kontakt vom Fluid mit dem Brenner auch an der Unterseite des Brenners. Beim Abtropfen vom Fluid fallen diese am Brenner vorbei auf den Boden des Grillgerätes. Dort zerplatzen die Tropfen beim Aufprall oder Explodieren, wenn der Wasseranteil des Tropfens verdampft. Dabei könnten auch von unterhalb des Brenners Tröpfchen des Fluides auf den Brenner gelangen. Das, unterhalb des Brenners angeordnete, Abschirmelement kann dies verhindern und somit in vorteilhafter Weise die Möglichkeit eines Kontaktes des Fluides mit dem heißen Heizmittel auf ein Minimum reduzieren.

In diesem Zusammenhang kann in vorteilhafter Weiterbildung der Erfindung vorgesehen sein, dass das Abschirmelement mittig unterhalb des Brenners angeordnet und breiter als der Brenner ausgebildet ist. Dadurch kann sich ein besonders wirkungsvoller Schutz des Brenners auch - in Betriebslage gesehen - von unten ergeben. Das Abschirmelement kann dabei auch als Wärmeschild oder als Wärmereflektor ausgebildet werden. Infrarotstrahlung, welche im Betrieb vom Brenner nach unten abgestrahlt wird, kann reflektiert und in Richtung des Gitterrostes gelenkt werden. Damit können Effizienz und Wirkungsgrad des Grillgerätes weiter erhöht werden.

Die Erfindung wird unter Bezugnahme auf die beigeschlossenen Zeichnungen, in welchen Ausführungsformen beispielhaft dargestellt sind, näher beschrieben. Dabei zeigt:
Fig. 1 einen erfindungsgemäßen Gitterrost in einer ersten Ausführungsform im Schrägriss;
Fig. 2 den Gitterrost der ersten Ausführungsform im Grundriss;
Fig. 3 den Gitterrost der ersten Ausführungsform im Seitenriss;
Fig. 4 einen Brenner, eine Ablaufrinne, ein Abschirmelement und den Gitterrost in einer ersten Ausführungsform im Aufriss;
Fig. 5 den Brenner, die Ablaufrinne und den Gitterrost der ersten Ausführungsform in der Sicht von unten;
Fig. 6 den Brenner, die Ablaufrinne, das Abschirmelement und den Gitterrost der ersten Ausführungsform im Schrägriss;
Fig. 7 den Brenner und den erfindungsgemäßen Gitterrost in einer zweiten Ausführungsform im Aufriss ;
Fig. 8 zwei Brenner und den erfindungsgemäßen Gitterrost in einer dritten Ausführungsform im Aufriss;
Fig. 9 den Brenner, die Ablaufrinne, das Abschirmelement und den Gitterrost der dritten Ausführungsform im Aufriss;
Fig. 10 den Brenner, die Ablaufrinne, das Abschirmelement und den Gitterrost der dritten Ausführungsform im Schrägriss;
Fig. 11 den erfindungsgemäßen Gitterrost in einer vierten Ausführungsform im Schrägriss;
Fig. 12 den erfindungsgemäßen Gitterrost der vierten Ausführungsform im Aufriss;
Fig. 13 den Brenner, die Ablaufrinne, das Abschirmelement und den Gitterrost der vierten Ausführungsform im Aufriss;
Fig. 14 den Brenner, die Ablaufrinne, das Abschirmelement und den Gitterrost der vierten Ausführungsform im Schrägriss und
Fig. 15 den Brenner, die Ablaufrinne und den Gitterrost in einer fünften Ausführungsform im Aufriss.
Fig. 16 eine besonders bevorzugte sechste Ausführungsform des Gitterrosts im Aufriss;
Fig. 17 den Gitterrost gemäß Fig. 16 im Seitenriss;
Fig. 18 eine vorteilhafte Anordnung des Gitterrosts gemäß Fig. 16 und der Ablaufrinne im Aufriss; und
Fig. 19 die vorteilhafte Anordnung gemäß Fig. 18 im Schrägriss.

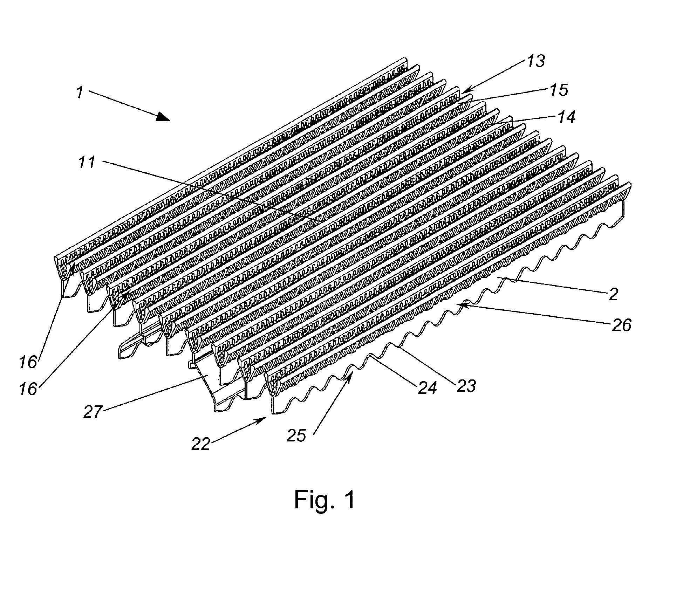

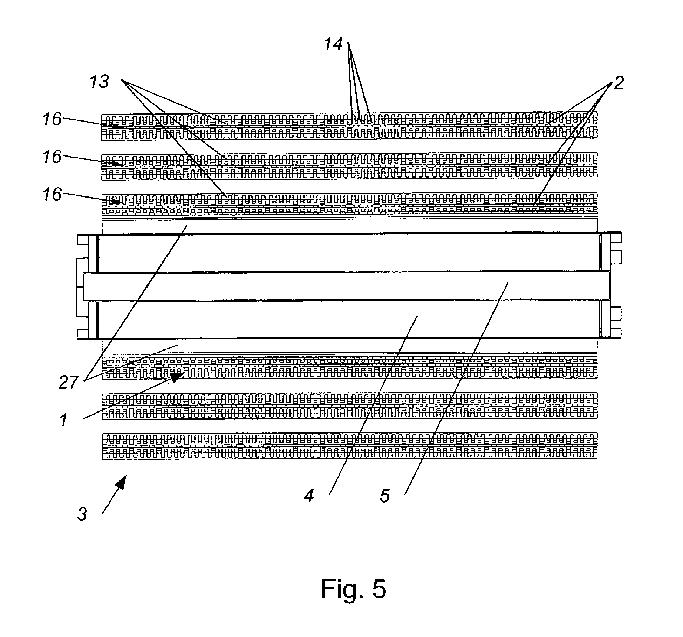

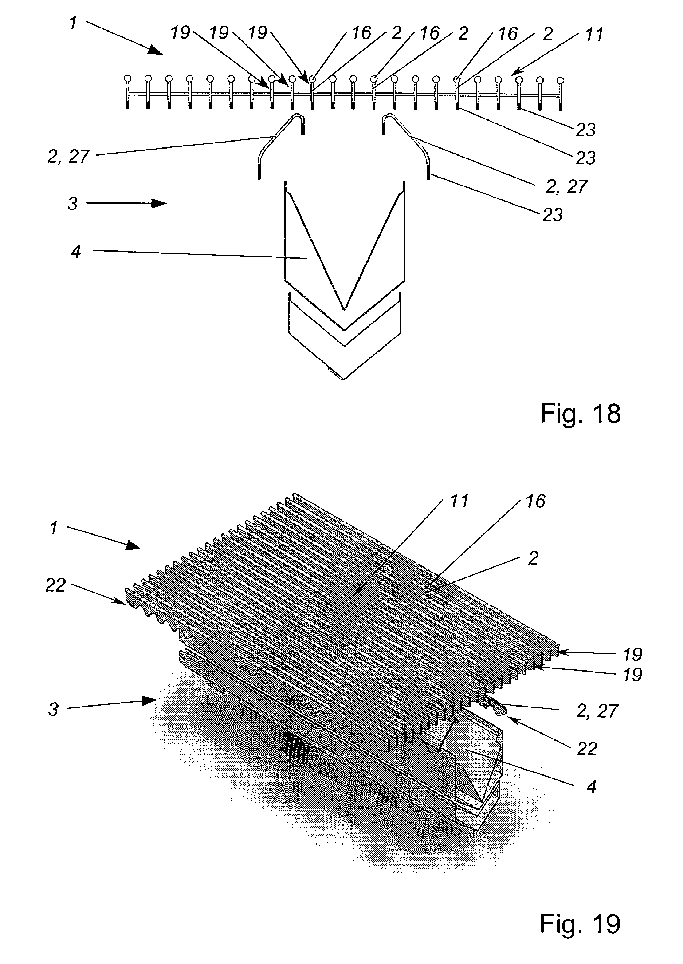

Die Fig. 1 bis 19 zeigen Ausführungsformen eines erfindungsgemäßen Gitterrostes 1 umfassend mehrere Stabelemente 16, welche beabstandet, parallel und in einer Ebene eine Auflagefläche 11 für Grillgut ergeben, wobei vorgesehen ist, dass an der Auflagefläche 11 gegenüberliegenden Seite wenigstens eine Abtropfplatte 2 angeordnet ist, und dass die wenigstens eine Abtropfplatte 2 an zumindest einer freien Längskante 22 eine Vielzahl von Abtropfbereichen 23 aufweist, wobei die Abtropfbereiche 23 im Betrieb ein gezieltes Abtropfen von aus Grillgut ablaufendem Fluid in dem jeweiligen Abtropfbereich 23 bewirken.

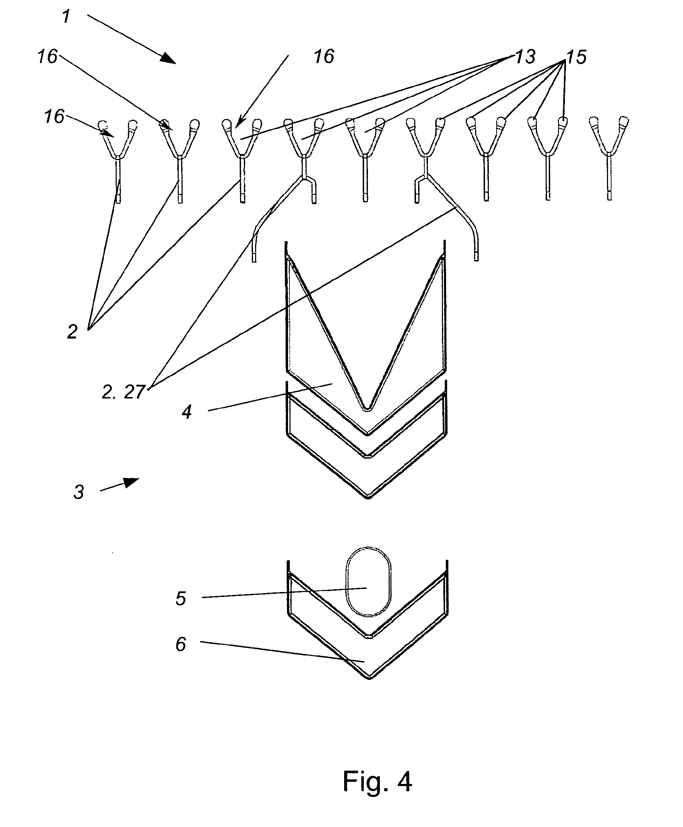

Teile eines Grillgerätes 3, wobei das Grillgerät den erfindungsgemäßen Gitterrost 1 aufweist, werden in den Fig. 4 - 10 und 12 - 15 gezeigt.

In der Gebrauchslage des Gitterrostes 1 zeigt die Auflagefläche 11 nach oben und die der Auflagefläche 11 gegenüberliegenden Seite nach unten.

Der Gitterrost 1 umfasst mehrere Stabelemente 16, welche beabstandet, parallel und in einer Ebene die Auflagefläche 11 ergeben und die Gitterrostgröße und somit die Grillfläche des Grillgerätes 3 bestimmen. Diese Stabelemente 16 können als zylindrischer Körper, als zylindrischer Hohlkörper, als Rinnen 13, als Vier- oder Mehrkantstäbe ausgeführt sein.

Eine bevorzugte Ausführungsform des Gitterrostes 1 ist in den Fig. 1 - 3 dargestellt. Der Gitterrost 1 umfasst mehrere stabförmige Rinnen 13. Die Rinnen 13, können als Gussteil, beispielsweise Grauguss, Aluminiumslegierungsguss, Aluminiumguss oder Eisenguss, ausgebildet sein, oder als Walzteil, als Pressteil, als Stanzteil, beispielsweise einem Blech, insbesondere einem Lochblech, ausgebildet sein. Die Rinnen 13, welche bevorzugt parallel und in einer Ebene mit konstantem Abstand nebeneinander liegen können, ergeben zusammen den Gitterrost 1, die Gitterrostgröße und die Auflagefläche 11. Sind sämtliche Rinnen 13 des Gitterrostes 1 als Gussteil ausgeführt, so kann man auch von einem Gussrost sprechen, um hiermit auf die besondere Eigenschaft hinzuweisen, dass sämtliche, die Auflagefläche 11 bildenden Stabelemente 16 gegossen sind.

Die Platzierung der einzelnen Rinnen 13 im Grillgerät 1 kann dabei auf mehrere Arten erfolgen: Die Rinnen 13 können in einem Rahmen 12 aufgenommen werden, in einer Halterung in den Wänden des Grillgerätes 3 eingesetzt werden oder sämtliche, die Auflagefläche 11 ausbildenden, Rinnen 13 können einstückig ausgebildet sein. Die einstückige Ausführung des Gitterrostes 1 mit den vom Gitterrost 1 umfassten Rinnen 13, ist sowohl beim Stanzen des Gitterrostes 1 aus einer Platte oder Lochplatte möglich, als auch beim Gießen des Gitterrostes 1, und somit der Herstellung eines Gussrostes.

An der der Auflagefläche 11 gegenüberliegenden Seite des Gitterrostes 1 ist an jeder Rinne 13 eine Abtropfplatte 2 angeordnet. Diese Abtropfplatte 2 kann aus einem hitzebeständigen Material hergestellt werden. Bevorzugt ist vorzusehen, dass die Abtropfplatte thermisch belastbare Materialien, insbesondere Stahl, Aluminium sowie Faserverbundwerkstoffe umfassend Oxidkeramik, und/oder Metalle der Gruppen 4, 5, 6, 7, 8, 9, 10 des Periosensystems gemäß IUPAC Notation, umfasst. Die Abtropfplatte 2 kann als als Stanzteil, Pressteil, Walzteil, als Gussteil, insbesondere als Stahlguss, oder als Druckguss, insbesondere Aluminum- oder Aluminiumlegierungsdruckguss, ausgebildet sein. Wenn die Abtropfplatte 2 als Gussteil ausgeführt ist, dann können die Rinne 13 und die Abtropfplatte 2 auch einstückig ausgeführt sein. Dies hat den besonderen Vorteil der guten Wärmeleitung von Abtropfplatte 2 zu Rinne 13 und begünstigt damit den Wärmetransport vom Heizelement - insbesondere dem Brenner 5 - zur Auflagefläche 11 für das Grillgut. Bei einstückiger Ausbildung von Rinne 13 und Abtropfplatte 2 weist der Gitterrost 1 eine besonders gute Wärmespeicherung bei gleichzeitig kompakter Bauweise auf.

Wenn die Abtropfplatte 2 aus einem Blech, beispielsweise aus einer Metallplatte gestanzt ist, kann die Abtropfplatte 2 auch als Abtropfblech bezeichnet werden. Vor allem ein Abtropfblech 2 mit gutem thermischem Leitwert, beispielsweise aus Metallblech, insbesondere aus Aluminiumblech, kann die Homogenität der Temperaturverteilung im Bereich der Auflagefläche 11 unterstützen. Hiezu kann der thermische Leitwert des Abtropfbleches 2 höher als jener der Stabelemente 16 oder der Rinnen 13 sein.

Die Abtropfplatte 2 kann dünnwandig ausgeführt sein, um die aufströmende heiße Luft möglichst wenig zu behindern. Die Abtropfplatte 2 und die Rinne 13 können in lösbarer oder unlösbarer Verbindung mehrstückig ausgeführt sein. Die lösbare Verbindung ermöglicht die getrennte Reinigung von Rinne 13, Gitterrost 1 und Abtropfplatten 2. Ebenfalls können die Rinne 13 und die Abtropfplatte 2 jeweils einstückig ausgebildet und dass die Abtropfplatte 2 mit einem Verbindungsmittel mit der Rinne 13 verbunden sein. Oder es können die Rinne 13 und die Abtropfplatte 2 einstückig ausgebildet sein.

Auch können mehrere Rinnen 13 einstückig ausgebildet sein, beispielsweise können sämtliche Rinnen 13 und Abtropfplatten 2 - in Gebrauchslage gesehen - auf einer Hälfte des Gitterrostes einstückig ausgebildet sein. Die Rinne 13 mit einem dachförmigen Element 27 als Abtropfplatte 2 kann dabei mehrstückig ausgebildet sein um die Reinigung des dachförmigen Elementes 27 zu erleichtern und zu vermeiden, dass der Gitterrost 1 großvolumig wird und beispielsweise nicht mehr in eine Spülmaschine passt.

In vorteilhafter Weise können sämtliche Rinnen 13 und sämtliche Abtropfplatten 2, insbesondere der Gitterrost 1 als Ganzes, einstückig ausgebildet sein. Dies erscheint besonders vorteilhaft, wenn der Gitterrost 1 eine bestimmte Grundgröße nicht übersteigt.

An jeder Abtropfplatte 2 zeigen sich an der freien Längskante 22 der Abtropfplatte 2 eine Vielzahl von Abtropfbereichen 23, welche auch in Form von Zähnen, Höckern, Nasen oder Erhöhungen ausgebildet sein können, und eine Vielzahl von Vertiefungen 24, welche auch in Form von Einbuchtungen, Ausnehmungen, Nuten oder Schlitzen ausgebildet sein können. Diese Abtropfbereiche 23 und diese Vertiefungen 24 ergeben bei der dargestellten Ausführungsform in ihrer Gesamtheit eine im Wesentlichen periodische Profilierung 25. Die in den Fig. 1 bis 3 dargestellte Profilierung 25 weist im Wesentlichen die Form einer Sinuskurve auf. Mögliche periodische Profilierungen sind aber auch jedes andere periodische Muster, wie beispielsweise ein Sägezahnmuster, ein Zickzackmuster oder ein Rechteckmuster. Die Abtropfplatte 2 kann sich über einen Großteil, insbesondere im Wesentlichen über die gesamte Länge des Gitterrostes 1 erstrecken. Dabei ist die Länge des Gitterrostes 1 als die Länge der vorzugsweise im Wesentlichen parallelen Stabelemente 16 oder der Rinnen 13, welche einen Teil der Auflagefläche 11 bilden. Die zur Auflagefläche hin vorzugsweise öffnen Rinnen 13 können mit verstärkten Längskanten 15 ausgebildet sein. Diese Längskanten 15 liegen dabei zueinander parallel und können einen Teil der Auflagefläche 11, insbesondere im Wesentlichen die Auflagefläche 11 des Gitterrostes 1. Die die Auflagefläche 11 bildenden Stabelemente 16 und/oder Rinnen 13 können auch oval, rund, sechseckig oder anderer, vorzugsweise der Außenkontur des Grillgerätes 3 angepasster, Form ausgebildet sein und können dabei auch kreisförmig um die - in Betriebslage gesehen - senkrechte Mittelachse des Grillgerätes 3 angeordnet sein.

Die Fig. 1 zeigt auch, dass die Abtropfplatte 2 an zwei Rinnen 13 als dachförmiges Element 27 ausgebildet ist. Auch kann ein Grillgerät 3 mit erfindungsgemäßem Gitterrost 1 kein oder nur ein dachförmiges Element 27 umfassen, oder aber mehr als zwei dachförmige Elemente 27 umfassen. Insbesondere kann auch an jeder Rinne 13 die Abtropfplatte 2 als dachförmiges Element 13 ausgebildet sein.

Durch die große Fläche der Abtropfplatten 2 entsteht ein Wärmetauschereffekt und ein guter Wärmeaustausch zwischen der nach oben strömenden Heißluft und dem Gitterrost 1. Dabei wird die Heißluft abgekühlt und der Gitterrost 1, welcher auch als Wärmespeicher dient, erhitzt. Ähnliche Temperaturen von Heißluft und Gitterrost 1 im Bereich der Auflagefläche 11 unterstützen homogene Temperaturverteilungen und Grillgeräteeigenschaften auf der gesamten Grillfläche.

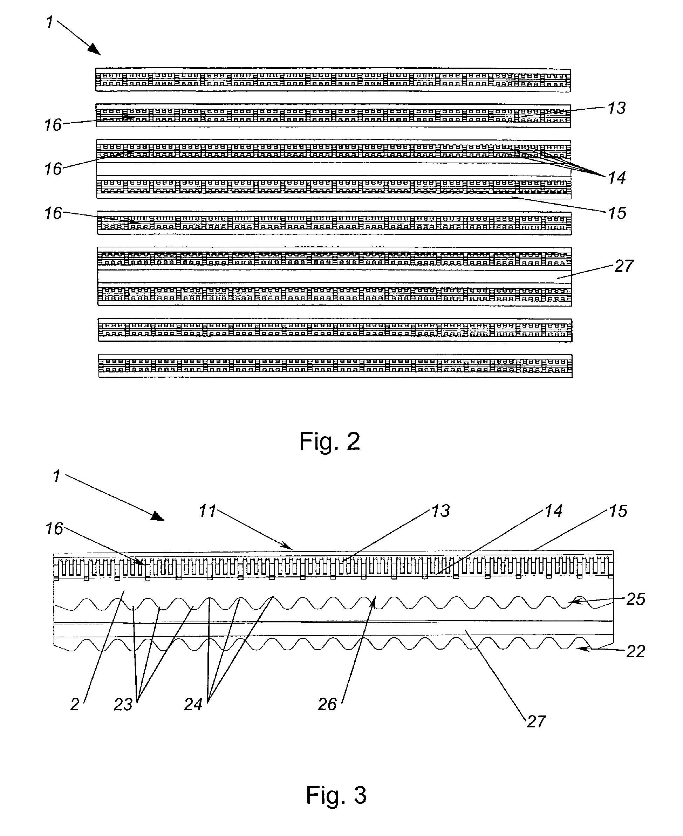

In der Fig. 3 sind die Durchtrittsöffnungen 14 besonders gut sichtbar. Diese Durchtrittsöffnungen 14 sind in dieser Ausführungsform als Querschlitze ausgebildet. Die Querschlitze ermöglichen ein besonders gutes Abfließen des aus dem Grillgut austretenden Fluides.

Das Fluid beinhaltet üblicherweise mehrere Bestandteile, hauptsächlich verschiedene Fette und Wasser, welche bei unterschiedlicher Temperatur verdampfen. Der Wasseranteil eines Fluides oder eines Fluidtropfens verdampft üblicherweise bei niedrigeren Temperaturen wie der Fettanteil des Fluides oder des Fluidtropfens. Beim Kontakt mit heißen Oberflächen kann schnell verdampfendes Wasser ein Explodieren des Tropfens bewirken und der Tropfen zerplatzt dabei in viele kleine Tröpfchen, welche in unterschiedliche Richtungen "wegspritzen". Die in unterschiedliche Richtungen spritzenden Fluidtröpfchen bestehen nunmehr hauptsächlich aus flüssigem Fett und sind weiterhin brennbar.

Die Durchtrittsöffnungen 14 erfüllen somit einerseits den Zweck von der Auflagefläche 11 nach unten ablaufendes Fluid an die Abtropfplatten überzuleiten und andererseits der vom Brenner aufsteigenden Heißluft möglichst einfachen Durchtritt durch den Gitterrost 1 und zur Auflagefläche 11 zu ermöglichen.

Beim Ablaufen des Fluides aus dem Grillgut tritt das Fluid zuerst mit den Stabelementen 16 der Grillauflagefläche 11 in Kontakt. Wenn diese Stabelemente 16 als Rinnen 13 ausgebildet sind, so tritt das Fluid zuerst mit der Längskante 15 in Kontakt. Diese Längskante kann auch verbreitert, verdickt oder verstärkt ausgeführt sein. Eine verstärkte Ausführung der Längskante 15 bewirkt einerseits eine sichere Auflage des Grillgutes am Gitterrost 1, andererseits ein gleichmäßig ausgeprägtes Grillrostmuster am fertigen Grillgut und weiters den großflächigen Kontakt von Fluid und verstärkt ausgebildeter Längskante. Beim großflächigen Kontakt können bereits erste Teile des Wasseranteiles im Fluid verdampfen. Das Fluid kann explosionsartig "auseinander spritzen" und es kann sich ein typisches Grillgeräusch einstellen. Im weiteren kann das Fluid, welches bereits geringeren Wasseranteil aufweisen kann, in der Rinne in Richtung Durchtrittsöffnungen 14 nach unten laufen. Diese Durchtrittsöffnungen 14, welche runde, eckige, ovale, geschlitzte oder anders geformte Durchbrüche im Gitterrost 1 sein können, ermöglichen ein Durchlaufen des Fluides nach unten, bei gleichzeitigem Durchströmen heißer Luft nach oben. Besonders können quergeschlitzte Durchtrittsöffnungen 14 einen geringen Luftwiderstand bieten und somit kann auch ein Gitterrost 1 mit vielen Rinnen 13 und geringem Abstand zwischen den parallelen Rinnen 13 einen geringen Luftwiderstand und gleichzeitig gute Ablaufeigenschaften für das ablaufende Fluid aufweisen. Beim Durchlaufen der Durchtrittsöffnungen 14, kann das Fluid auf mehreren Seiten in guten Kontakt mit der Oberfläche der Rinne 13 oder des Gitterrostes 1 gelangen, und kann somit von mehreren Seiten gut erhitzt bzw. gut durchgeheizt werden. Weitere Wasseranteile des Tröpfchens können bevorzugt in diesem Bereich verdampfen.

Auch an der Abtropfplatte 2 kann ein weiterer Wasseranteil des Fluidtröpfchens oder des Fluides verdampfen und die Abtropfplatte 2 kann, um diesen Effekt noch zu beschleunigen, eine Riffelung, oder eine sonstige Struktur zur Oberflächenvergrößerung, an der Fläche der Abtropfplatte 26 aufweisen. Selbst wenn die Wasseranteile bis zum und/oder beim Durchtritt durch die Durchtrittsöffnung 14 noch nicht verdampft sind, so kann der Wasseranteil des Tropfens auf der heißen Abtropfplatte 2 weiter verringert werden. Ein unkontrolliertes Zerplatzen eines Fluidtropfens im Freiraum zwischen Gitterrost 1 und Heizmittel, welcher in der Fig. 4 als Brenner 5 dargestellt ist, kann so vermieden werden.

Die Abtropfplatte 2 kann insbesondere zumindest im Bereich der Abtropfbereiche 23 im Wesentlichen vertikal ausgebildet sein, wie dies in den Fig. 1, 3, 4, 6, 7, 11, 13, 14 und 15 dargestellt ist. Durch die wenigstens bereichsweise vertikale Ausrichtung der Abtropfplatte 2 kann eine Abschirmwirkung gegen im Wesentlichen horizontal wegspritzende Fluidtröpfchen beim Zerplatzen eines Fluidtropfens gewährleistet sein. Dadurch kann das Heizmittel besonders gut gegen Fluid geschützt werden.

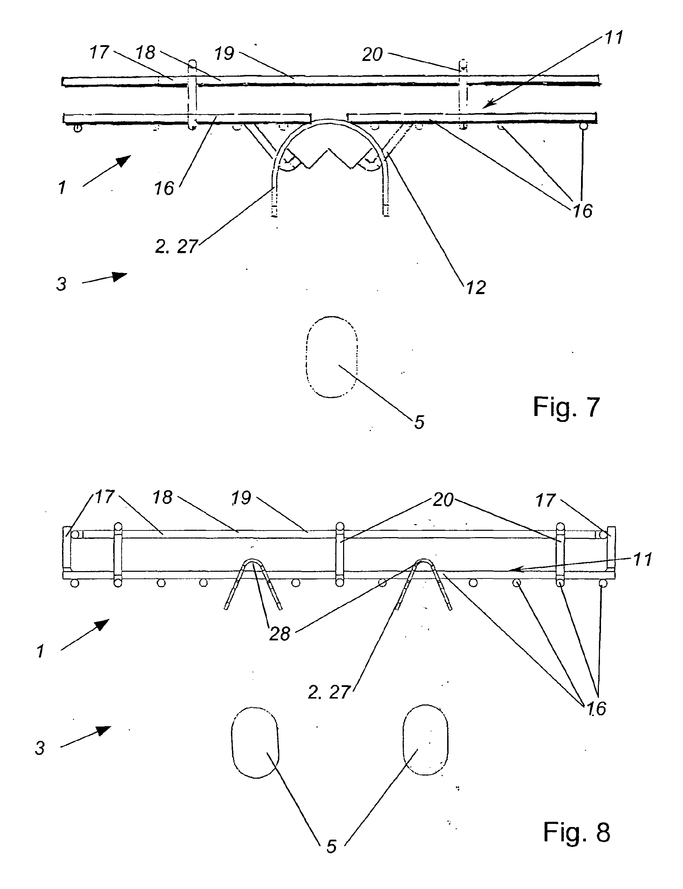

Die horizontale Abschirmwirkung kann auch bei der horizontal-schrägen Ausrichtung der Abtropfplatte 2 gemäß den bevorzugten Ausführungsformen gemäß der Fig. 8, 9 und 10 gegeben sein, wobei hier die Abtropfplatte 2 im Bereich der Abtropfbereiche 23 im Wesentlichen lediglich bis 30° gegenüber einer vertikalen Ebene geneigt ist, also mehr vertikal als horizontal ausgebildet ist.

Insbesondere in diesem Zusammenhang kann die freie Längskante 22 - in Gebrauchslage des Gitterrostes 1 gesehen - nach unten gerichtet und nach unten offen sein. Dabei kann jeder Abtropfbereich 23 - lokal betrachtet - eine am weitest unten ausgebildete Stelle entlang der freien Längskante 22 ausbilden, also ein lokales Minimum des Schwerkraftpotentials ausbilden. Dies kann insbesondere der Fall sein, wenn die Abtropfbereiche 23 als Erhöhungen 25 - der im Bereich der freien Längskante 22 im Wesentlichen vertikal nach unten gerichteten - Abtropfplatte 2 und zwischen jeweils zwei Erhöhungen 25 jeweils eine Vertiefung 24 entlang der freien Längskante 22 ausgebildet sind. Jede Vertiefung 24 kann dabei ein lokales Maximum des Schwerkraftpotentials entlang der freien Längskante 22 ausbilden. Das Fluid - welches der Scherkraft folgende nach unten und in Richtung des nächstliegenden Minimums des Schwerkraftpotentials an der Abtropfplatte entlang läuft - wird derart selbsttätig zum nächstgelegenen Abtropfbereich 23 laufen und dort - wiederum schwerkraftbedingt - abtropfen.

Dabei kann das Entlanglaufen des Fluides von einem Abtropfbereich 23 zu einem weiteren Abtropfbereich 23 auch bei einem - gegenüber einer horizontalen Ebene - geneigten Gitterrost 1 verhindert sein, da das Fluid nicht vom einem zumindest lokal vertikal niedriger liegenden Abtropfbereich 23 in eine an diesen Abtropfbereich 23 anschließende und vertikal höher liegende Vertiefung 24, entgegen der Schwerkraft, nach oben läuft. Dadurch kann der Gitterrost 1 um bis 20° geneigt zur horizontalen Ebene ausgebildet sein, womit das belegen des Gitterrostes 1 einfach und ergonomisch erfolgen kann und womit das Grillgerät 3 auch auf einer schrägen Fläche aufgestellt werden kann.

Es können auch ein, zwei oder mehrere Abtropfplatten 2 als dachförmige Elemente 27 ausgebildet sein. Diese dachförmigen Elemente 27 können in vorteilhafter Weise in Gebrauchslage oberhalb der Heizmittel, insbesonders der Brenner 5, angeordnet werden und sollen die Heizmittel vor herabtropfendem Fluid schützen. Derartige dachförmige Elemente 27 sind in unterschiedlichen Ausführungsformen in den Fig. 1 - 15 dargestellt.

Eine bevorzugte Möglichkeit der Ausbildung eines dachförmigen Elementes 27 kann die Asymmetrische sein, wie sie in den Fig. 1 bis 6 und 11 bis 14 dargestellt ist. Das asymmetrische dachförmige Element 27 gemäß dieser Ausbildung ist asymmetrisch mit zwei plattenförmigen Schenkel ausgebildet, welche sich in einer Schnittkante der Schenkel 28 treffen. An der einen Seite der Schnittkante der Schenkel 28 des dachförmigen Elementes 27 kann sich der schmale Schenkel befinden, an der anderen der breite Schenkel.

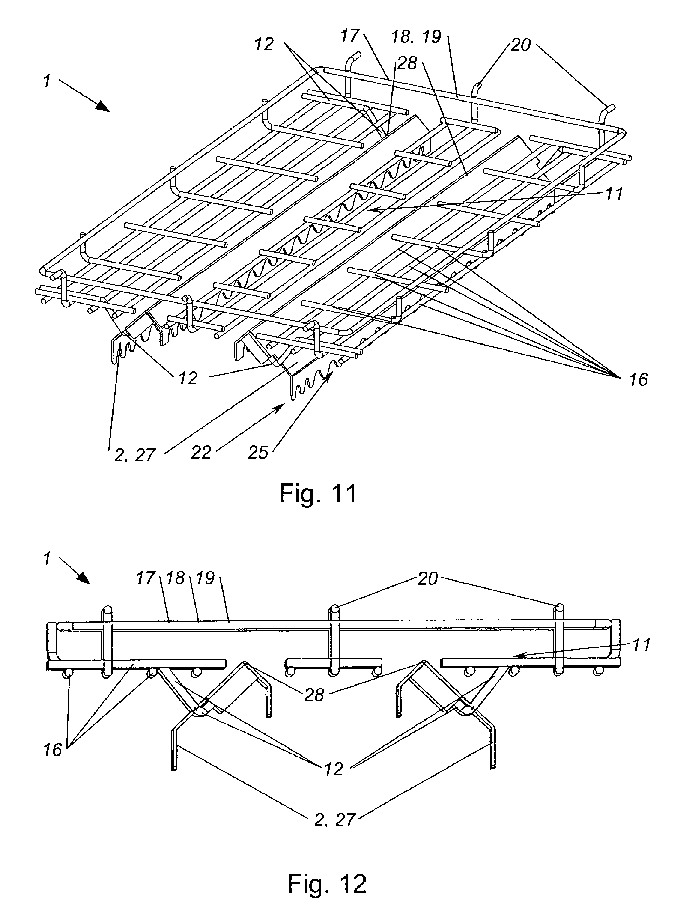

Die Abtropfplatte 2, insbesondere das dachförmige Element 27, kann auch lösbar in einem Rahmen 12 befestigt sein, wie dies in den Fig. 11 bis 14 dargestellt ist. Dabei ist die Montage und Demontage der Abtropfplatte 2, aller Abtropfplatten 2 und/oder dachförmigen Elemente 27 besonders einfach. In diesem Fall kann vorteilhafterweise der Gitterrost 1 ohne die Abtropfplatten 2 und ohne die dachförmigen Elemente 27 einstückig ausgebildet sein. An dem Gitterrost 1 kann der Rahmen zur Aufnahme der zumindest einen Abtropfplatte 2 und/oder des zumindest einen dachförmigen Elementes 27 angeordnet oder Rahmen 12 und Gitterrost 1 können einstückig ausgebildet sein. Dabei können die Abtropfplatten 2 und/oder die dachförmigen Elemente 27 vorteilhafterweise teilweise, insbesondere im Ganzen, einstückig ausgebildet sein. Dadurch ergeben sich zwei handliche und leicht lösbare Einheiten: die erste Einheit des umfasst den Gitterrost 1 und den Rahmen 12 und die zweite Einheit umfasst sämtliche Abtropfbereiche 23. Die beiden Einheiten können einfach Montiert und Demontiert werden. Die Reinigung der beiden Einheiten kann ebenso einfach erfolgen. Und die beiden Einheiten können ein modulares Gitterrostsystem bilden, sodass die zweite Einheit zum Brenner und zum Innenleben eines Grillgerätes 3 passt und die erste Einheit dem Kundenwunsch entsprechend ausgebildet sein kann. Es ergeben sich damit verschieden Kombinationsmöglichkeiten, beispielsweise mit einem Gitterrost 1 umfassend Stabelemente 16 oder einem Gussrost umfassend gegossene Rinnen 13 bei gleichzeitig geringem Aufwand in Herstellung und Montage.

In den Fig. 4, 6, 13 und 14 sind das asymmetrische dachförmige Element 27 gemeinsam mit dem Gitterrost 1, der Ablaufrinne 4 und dem Brenner 5 dargestellt. Es können zwei dachförmige Elemente 27 über der Ablaufrinne 4 derart angeordnet sein, dass die freie Längskante 22 der schmalen Schenkel der dachförmigen Elemente 27 oberhalb der Ablaufrinne 4 liegen. Von den schmalen Schenkeln abtropfendes Fluid tropft in die Ablaufrinne 4. Diese Ablaufrinne 4 ist eine breite Rinne, welche im Mittelbereich des Gitterrostes 1 positioniert und im Wesentlichen über die gesamte Länge des Gitterrostes 1 verlaufen kann. Die Ablaufrinne kann vorzugsweise geneigt ausgebildet sein. Das von der Ablaufrinne 4 aufgefangene Fluid aus dem Mittelbereich des Gitterrostes 1, insbesondere aus dem Bereich des Gitterrostes 1 zwischen den beiden schmalen Schenkeln des dachförmigen Elementes 27 kann an das niedrigere Ende der Ablaufrinne 4 abgeführt werden. Damit ist gewährleistet, dass diese Fluide nicht mit dem Heizelement in Berührung kommen können. Ebenso kann ein Sammeln und eine Zuführung des Fluides zu einer Verwertung vorgesehen sein. Die Ablaufrinne 4 kann zur Kühlung auch mit Kühlmittel durchspült werden. Dies kann eine Überhitzung der Ablaufrinne 4 und ein Verbrennen des sich in der Ablaufrinne 4 befindlichen Fluides verhindern.

Der breite Schenkel des dachförmigen Elementes 27 kann - in Gebrauchslage gesehen - oberhalb der Ablaufrinne 4 angeordnet sein und die freie Längskante 22 des breiten Schenkels kann in vorteilhafter Weise in seitlichem Abstand zur Seitenwand der Ablaufrinne 4 positioniert sein. In dieser vorteilhaften Positionierung des dachförmigen Elementes 27 kann das von der freien Längskante 22 abtropfende Fluid direkt auf den Boden des Grillgerätes 3 tropfen ohne, dass das Fluid mit der Seitenwand der Ablaufrinne 4 oder dem Brenner 5 in Kontakt kommt. In Gebrauchslage gesehen unterhalb des Brenners 5, kann ein weiteres Abschirmelement 6 angeordnet sein, wie dies in den Fig. 4, 6, 9, 10, 13 und 14 dargestellt ist. Dieses weitere Abschirmelement 6 kann als Abschirmung des Brenners 5 gegenüber Fluidtröpfchen, welche sich von unterhalb des Brenners 5 in Richtung Brenner 5 bewegen, Verwendung finden. Solche von unterhalb des Brenners 5 sich in Richtung des Brenners 5 bewegende Fluidtröpfchen können beim Auftreffen des von der Längskante 22 eines Abtropfelementes 2 oder eines Schenkels eines dachförmigen Elementes 27 Abtropfenden Fluides am Boden des Grillgerätes 3 entstehen.

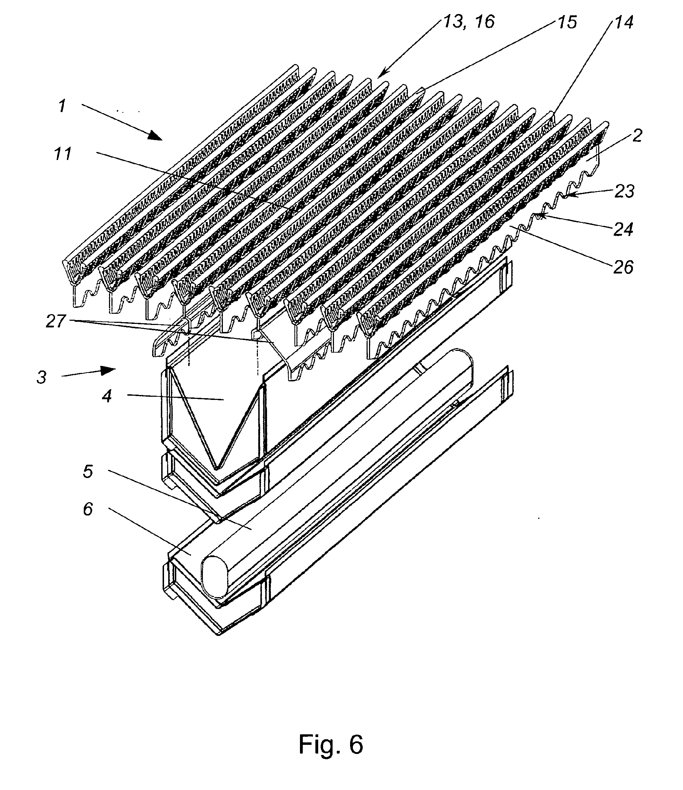

Die Fig. 6 zeigt in besonders übersichtlicher Form Teile des Grillgerätes 3 mit dem Gitterrost 1, welcher als Gussrost ausgeführt ist, gemäß der Ausführungsform des Grillrostes wie in Fig. 1 bis 3 beschrieben. Die Auflagefläche hat durch die parallelen und gleichmäßig beabstandeten Längskanten 15 in verstärkter Ausbildung eine ansprechende Optik und bietet dem Grillgut eine sichere Auflage. Durch den geringen Abstand der Längsrillen ist ein Hindurchfallen von Grillgut, insbesondere von schmalen Würsten, Karotten und

Auberginenscheiben kaum möglich. Die verstärkten Längskanten 15 hinterlassen gleichmäßig ausgeprägte Grillstreifen am Grillgut und somit wirkt fertig gegrilltes Grillgut optisch ansprechend, was sich wiederum positiv auf den Gesamteindruck über Grillgut und Grillkunst auswirkt. Der Luftstrom der vom Brenner 5 aufgeheizten Luft wird durch die Abtropfplatten 2 und die dachförmigen Elemente 27 in die Rinnen 13 und durch die Rinnen 13 hindurchgeleitet. Die quergeschlitzten Durchtrittsöffnungen 14 ermöglichen hohen Luftstromdurchsatz bei nur geringem Luftwiderstand auch bei geringem Abstand der Längskanten 15. Die Abschirmelemente unterhalb der Ablaufrinne 4 sowie die Ablaufrinne 4 erzeugen im Zusammenspiel mit den Abtropfplatten 2, den dachförmigen Elementen 27 und den Rinnen 13 eine möglichst homogene Temperaturverteilung an der Auflagefläche 11 und somit ist eine für alles Grillgut gleichmäßig nutzbare Auflagefläche 11 sicher gestellt. Die breite Abtropffläche des dachförmigen Elementes 27 hat dabei zwei Aufgaben: Einerseits wird ein zusätzlicher Schutz der darunter befindlichen Abschirmelemente der Ablaufrinne 4 vor explosionsartig auseinander spritzenden Fluidtropfen erzielt, was eine schnell eintretende Verschmutzung der Seitenflächen dieser Abschirmelemente verhindert und andererseits wird von der breiteren Abtropffläche heiße Luft in den Mittelbereich der Auflagefläche umgeleitet, welcher sonst von der Ablaufrinne 4 abgeschirmt wäre und daher sonst im Zentrum, sprich im Mittelbereich, der Auflagefläche 11 eine niedrigere Temperatur vorherrschen würde. Diese Ausführungsform eines Grillgerätes ermöglicht eine minimale Verschmutzung des Grillgeräteinnenbereiches. Zusätzlich kann der Gitterrost vom Grillgerät abnehmbar ausgebildet sein. Damit kann der Gitterrost einfach im Ganzen gereinigt werden. Es können auch Ausbildungen mit voneinander trennbaren Rinnen 13 und weiterführend einer trennbaren Verbindung von Abtropfplatte 2 und Rinne 13 vorgesehen sein. Dies erleichtert zusätzlich die Reinigung des Gitterrostes 1, vor allem bei größeren Gitterrosten 1. Die dachförmigen Elemente 27 können ebenfalls von den Rinnen 13 trennbar ausgebildet sein.

Die Fig. 7 zeigt eine zweite Ausführungsform des erfindungsgemäßen Gitterrostes 1. Die stabförmigen Elemente, sogenannte Stabelemente 16, können Metalldraht, beispielsweise umfassend Eisen-, Stahl-, Aluminium- und/oder Aluminiumlegierung, welche in einer Ebene liegen und die Auflagefläche 11 erzeugen, umfassen oder sind aus einem anderen stabförmigen Profilkörper gebildet. Diese Stabelemente 16 sind untereinander fest und nicht lösbar verbunden, beispielsweise verschweißt oder verlötet, und die Oberfläche des Gitterrostes kann verchromt ausgebildet sein. Damit der Gitterrost 1 eindeutig in einem Grillgerät 3 platziert und positioniert werden kann, können Vorsprünge 20 vorgesehen sein. Diese Vorsprünge 20 ermöglichen einen vorbestimmten Abstand zwischen der Auflagefläche 11 und den Wänden des Grillgerätes 3 einzuhalten.

Über der Auflagefläche 11 kann ein Begrenzungselement 17, ausgebildet als Geländer 18, angeordnet sein. Die Bezeichnung Begrenzungselement 17 gibt bereits den Hinweis, dass das Geländer 18, welches in diesem Fall, zumindest bereichsweise, mittels weiterer Stabelemente 19 ausgebildet sein kann, die Aufgabe hat, die Auflagefläche 11 an allen Seiten zu begrenzen, und zu vermeiden, dass das Grillgut über die Auflagefläche 11 hinaus ragt. Das Begrenzungselement 17 kann hiezu, zumindest bereichsweise, als Wandung, vorzugsweise mit Begrenzungsblechen, ausgebildet sein. Dies dient dazu einen vorbestimmten Mindestabstand von Grillgut zu den gegebenenfalls verschmutzten Wänden des Grillgeräts 3 einzuhalten. Damit kann einerseits die Verschmutzung der Wände des Grillgeräts 3 weitestgehend vermieden werden und andererseits kann damit sichergestellt werden, dass das Grillgut nicht in Kontakt mit den Wänden des Grillgerätes 3 kommt. Ein Herunterlaufen von aus dem Grillgut austretendem und vom Grillgut ablaufendem Fluid an den Wänden des Grillgerätes 3 kann ebenfalls damit verhindert werden. Eine Wandung als Begrenzungselement 17 dient auch dazu, dass die Wände des Grillgerätes 3 im Betrieb weniger verschmutzen. Im Bereich der Auflagefläche explodierende Fluidtropfen können beim seitlichen wegspritzen nicht mehr an die Wände des Grillgerätes 3 gelangen. Die Wandung kann mit dem Gitterrost 1 oder getrennt von diesem gereinigt werden und die Sauberkeit und Hygiene des Grillgerätes 3 kann über einen langen Einsatzzeitraum gewährleistet bleiben.

Die Stabelemente 16 und/oder die weiteren Stabelemente 19 können aus hitzebeständigem Material, vorzugsweise aus Metall, insbesondere Stahl oder Leichtmetall, beispielsweise Aluminium oder einer Aluminiumlegierung, aufgebaut sein. Die Stabelemente 16 und/oder die weiteren Stabelemente 19 können als Stanzteil, Pressteil, Walzteil, als Gussteil, insbesondere als Stahlguss, oder als Druckguss, insbesondere Aluminiumdruckguss oder Aluminiumlegierungsdruckguss, ausgebildet sein. Dies ermöglicht einfache Herstellung und hohe Haltbarkeit der Stabelemente 16 und/oder weiteren Stabelemente 19.

In Fig. 7 ist weiters die Abtropfplatte 2, ausgebildet als dachförmiges Element 27, sichtbar. Bei dieser Ausführungsform des erfindungsgemäßen Gitterrostes 1 kann das dachförmige Element 27 symmetrisch, mit halbrundem oberem Bereich und mit zwei ebenen, insbesondere mit - in Gebrauchslage des Gitterrostes 1 gesehen - nach unten gerichteten, Seitenwänden ausgebildet sein. An den freien Längskanten 22 der Seitenwände sind Abtropfbereiche 23 und

Vertiefungen 24 ausgebildet. Vorzugsweise können diese als periodische Profilierung 25 ausgebildet sein. Das dachförmige Element 27 kann mehrere vorteilhafte Wirkungen aufweisen und ist auf die Größe der Auflagefläche 11 und auf das Heizmittel abgestimmt. Einerseits kann das dachförmige Element 27 die Wirkung eines Spritzschutz aufweisen, sodass nur minimale Mengen des vom Grillgut ablaufenden Fluides auf den Brenner 5 gelangen können und somit die Belastung durch bei der Verbrennung des Fluides entstehende aromatisierte Kohlenwasserstoffe gering ist. Andererseits kann das im oberen Bereich halbrund ausgeführte dachförmige Element 27 die Wirkung aufweisen, eine Temperaturspitze des Mittenbereichs der Auflagefläche 11 zu verhindern. Dies kann vorteilhaft sein, da dies eine Anordnung eines einzelnen zentralen Brenners 5 bei gleichzeitig möglichst homogener Temperaturverteilung im Bereich der Auflagefläche 11 ermöglichen kann. Das dachförmige Element 27 kann mittels eines Rahmens 12 lösbar mit dem Gitterrost 1 verbunden sein. Eine einfache Montage und Demontage von dachförmigem Element 27 und Gitterrost 1 kann möglich sein, was wiederum eine einfache und gründliche Reinigung von Gitterrost und

Abtropfplatte 2 ermöglichen kann. Die Ausführungsform eines Grillgerätes 3 mit erfindungsgemäßem Gitterrost 1 gemäß der Darstellung in Fig. 8 ist eine besonders einfache und kostengünstige in der Herstellung.

Die zentralen Bauteile einer weiteren einfachen und kostengünstig herstellbaren Ausführungsform des Grillgerätes 3 mit Gitterrost 1 und Brenner 5 ist in Fig. 8 dargestellt. In Fig. 8 sind folgende Bauteile gezeigt: der Gitterrost 1, mehrere Vorsprünge 20, das Begrenzungselement 17, ausgebildet als Geländer 18, und das weitere Stabelemente 19 umfasst, fest und unlösbar miteinander verbundene Stabelemente 16, die die Auflagefläche 11 bilden, zwei Abtropfplatten 2, welche als symmetrische, dachförmige Elemente 27 ausgebildet sind und zwei unterhalb der beiden dachförmigen Elemente 27 angeordnete Brenner 5. Anstatt zwei Brennern 5 und zwei dachförmigen Elementen 27 könnten auch nur ein Brenner 5 und ein dachförmiges Element 27 oder mehr als zwei Brenner 5 und mehr als zwei dachförmige Elemente angeordnet sein. Dabei können in bevorzugter Anordnung jeweils ein Brenner 5 und jeweils ein dachförmiges Element senkrecht übereinander angeordnet sein. Diese Anordnung ist besonders bevorzugt, wenn wie in Fig. 8 dargestellt, keine Ablaufrinne 4 zwischen dem zumindest einen dachförmigen Element 27 und dem zumindest einen Brenner 5 positioniert ist.

In Fig. 8 sind deutlich die beiden über die Ebene der Auflagefläche 11 hinausragenden Schnittkanten 28 der beiden symmetrischen, dachförmigen Elemente 27 zu erkennen, wie diese in einer bevorzugten Ausführungsform ausgebildet sein können. Damit kann eine einfache Montage des zumindest einen dachförmigen Elementes 27 ohne zusätzlichen Rahmen ermöglicht werden, wenn der Gitterrost 11 für ein Verclipsen oder ein Einclipsen eines zumindest einen dachförmigen Elementes 27 ausgebildet ist.

Eine Anordnung von zwei oder mehr Brennern 5 im Brennerraum des Grillgerätes 3 kann vorteilhaft sein, da dies eine homogene Temperaturverteilung im Bereich der Auflagefläche 11 begünstigt.

Ebenfalls kann die enge Anordnung von dachförmigen Abtropfelementen 27 und Stabelementen 16 vorgesehen sein, ohne dass die dachförmigen Elemente ein großes Hindernis für die heiße aufsteigende Luft darstellen. Ein Durchfallen von Grillgut wird von den Stabelementen 16 verhindert und ein großflächiger Kontakt mit heißer Grillluft wird sichergestellt und gleichzeitig werden die Heizmittel wirkungsvoll gegenüber vom Grillgut stammenden Fluid geschützt, sodass es zu keiner Verbrennung dieser Fluide kommen kann.

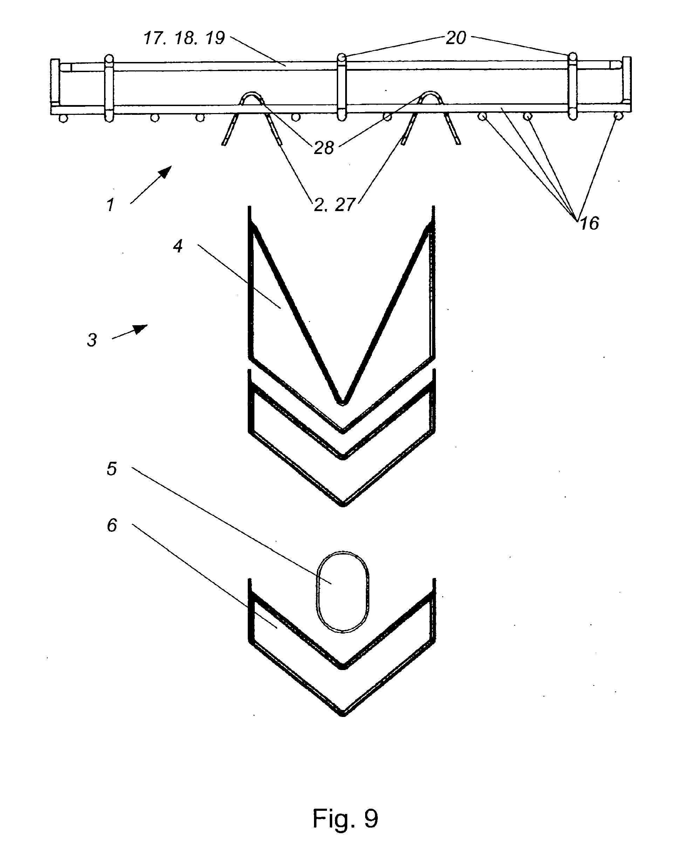

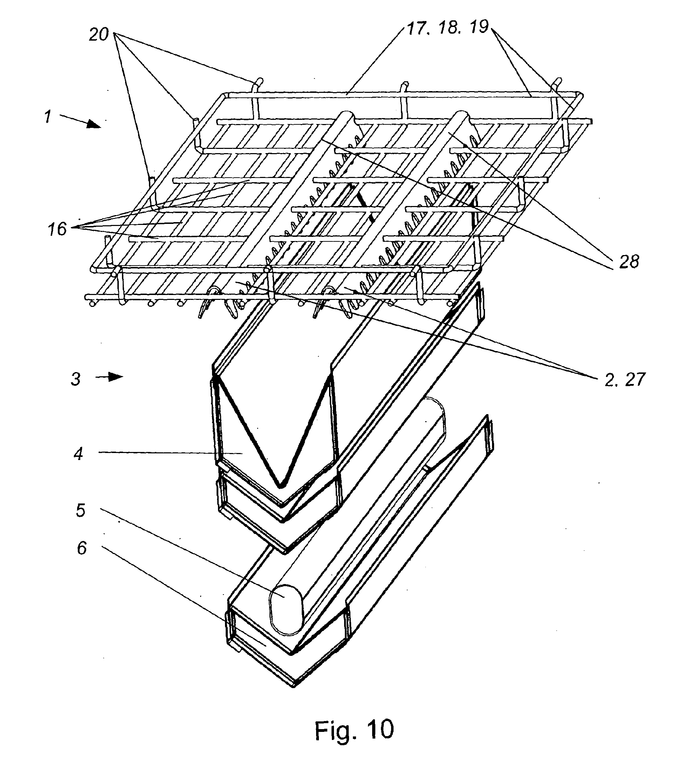

In Fig. 9 und 10 ist eine dritte Ausführungsform des erfindungsgemäßen Gitterrostes 1, der Ablaufrinne 4, des Brenners 5 und des weiteren Abschirmelementes 6 dargestellt. Der Gitterrost 1 oder der Grillrost - wie in Fig. 10 und 11 dargestellt - entspricht dem in Fig. 9 dargestellten Gitterrost 1 oder Grillrost. Bei dieser Ausführungsform können die dachförmigen Elemente 27 senkrecht oberhalb der beiden Seitenflächen der zumindest einen Ablaufrinne 4 angeordnet sein. Dabei kann in vorteilhafter Ausführungsform die Schnittkante 28 der Schenkel eines dachförmigen Elementes 27 senkrecht oberhalb einer Seitenfläche der Ablaufrinne 4 angeordnet sein. Damit kann sichergestellt werden, dass jeweils die eine freie Längskante 22 eines dachförmigen Elementes 27 - in Gebrauchslage gesehen - oberhalb der Ablaufrinne 4 angeordnet ist, und jeweils die andere freie Längskante 22 des dachförmigen Elementes 27, oberhalb und seitlich versetzt der Ablaufrinne 4 angeordnet ist. Somit kann sichergestellt werden, dass kein aus dem Grillgut auslaufendes Fluid auf die Seitenwand der zumindest einen Ablaufrinne 4 gelangt und an der Seitenwand der Ablaufrinne 4 ablaufen kann. Der Verschmutzung der Seitenwände und dem Kontakt Fluid und Brenner 5 kann damit in vorteilhafter Weise vorgebeugt werden.

Die Anordnungseinheit, eine Ablaufrinne 4 und jeweils zwei darüber angeordnete dachförmige symmetrische oder asymmetrische Elemente 27, wie sie beispielsweise in Fig. 10 dargestellt ist, kann mehrmals nebeneinander in einem Grillgerät 3 vorgesehen sein. Ebenfalls kann das zumindest eine dachförmige Element 27 asymmetrisch ausgebildet sein. Auch bei der Ausführung eines Grillgerätes 3 mit mehreren Ablaufrinnen 4 und mehreren dachförmigen Elementen 27 kann der Gitterrost 1 als Gussrost oder als Drahtrost ausgebildet sein. Dabei können die dachförmigen Elemente sowohl symmetrisch als auch asymmetrisch ausgebildet sein und die die Auflagefläche 11 ausbildenden Stabelemente 16 können als Rinnen 13 oder als Drahtprofile ausgebildet sein, und die Wahl eines Gussrostes oder eines Drahtrostes kann dem Benutzer des Grills überlassen werden, welcher sich gemäß seinen individuellen Wünschen für den einen, den anderen oder beide Arten des Gitterrostes 1 entscheiden kann.

Ein Grillrostunterbau - umfassend zumindest den Brenner 5 und die Grillgerätewände - gleicher Größe und gleichen Aufbaus, kann sowohl einen Gitterrost 1 aus Guss als auch einen Gitterrost 1 aus Draht oder Drahtprofilen aufnehmen kann, und somit können bei gleichem Grillrostunterbau unterschiedliche Grillgeräte 3 mit unterschiedlichen Grilleigenschaften ausgebildet werden. Damit können durch Stückzahlsteigerung der Bauteile im Bereich des Gitterrostunterbaus die Herstellungskosten bei gleichzeitiger Individualisierung des Grillgerätes 3 gesenkt werden.

Eine weitere Ausführungsform des erfindungsgemäßen Gitterrostes 1 ist in den Fig. 11 bis 14 dargestellt. Diese Figuren zeigen den Gitterrost 1 aus Stabelementen 16, vorzugsweise aus miteinander verschweißten oder verlöteten Metalldrähten, mit dem umlaufendem Begrenzungselement 17, welches als Geländer 18 aus weiteren Stabelementen 19 ausgeführt sein kann, zwei Abtropfplatten 2, wobei auch eine oder mehr als zwei Abtropfplatten 2 vorgesehen sein können und welche vorzugsweise als dachförmige Elemente 27 ausgebildet sein können, den Rahmen 12 zur lösbaren Montage der dachförmigen Elemente 27 am Gitterrost 1, Vorsprünge 20 zur von den Wänden des Grillgerätes 3 Beabstandeten Positionierung des Gitterrostes 1, sowie die Ausbildung einer periodischen Profilierung 25 entlang der Längskante 22 des dachförmigen Elementes 27. Das dachförmige Element 27 kann sich im Wesentlichen über die gesamte Länge des Gitterrostes 1 erstrecken. Jedes der beiden dargestellten dachförmigen Elemente 27 kann mittig zwischen zwei, die Auflagefläche 11 bildenden Stabelemente 16 angeordnet sein, und die Schnittkante 28 der dachförmigen Elemente 27 kann ebenfalls einen Teil der Auflagefläche 11 bilden. Ebenso kann die Schnittkante der Schenkel 28 des zumindest einen dachförmigen Elementes 27 aus der Ebene der Stabelemente, insbesondere - in Gebrauchslage gesehen - nach oben, hervorragen. Letztere Anordnung kann die homogene Temperaturverteilung in vorteilhafter Weise unterstützen da größere Heißluftsammlungen und Temperaturspitzen verhindert werden können. Diese Ausführungsformen des erfindungsgemäßen Gitterrostes mit Abtropfplatten 2, Abtropfelementen und dachförmigen Elementen 27 kann mit Hilfe des Rahmens 12 eine einfache Montage und Demontage der dachförmigen Elemente 27 ermöglichen, kann die einfache Montage und Demontage des Gitterrostes 1 am Grillrostunterbau oder am Grillgerät 3 ermöglichen und die gründliche Reinigung des Gitterrostes 1 inkl. montierter Abtropfplatten 2 oder die gründliche Reinigung von Gitterrost 1 und Abtropfplatten 2 in demontiertem Zustand vereinfachen.

Durch Einhalten eines konstanten Abstandes von zueinander parallel verlaufenden Stabelementen 16 und Einhalten desselben Abstandes zum zu den Stabelementen parallel Verlaufenden und in einer Ebene liegenden Schnittpunkt der Schenkel 28 des dachförmigen Elementes 27 kann ein konstanter Längskantenabstand auf der Auflagefläche sichergestellt werden und das Grillmuster sollte auf dem fertigen Grillgut in diesem Fall besonders gleichmäßig sein, was für die ansprechende Optik des fertigen Grillgutes von Vorteil ist.

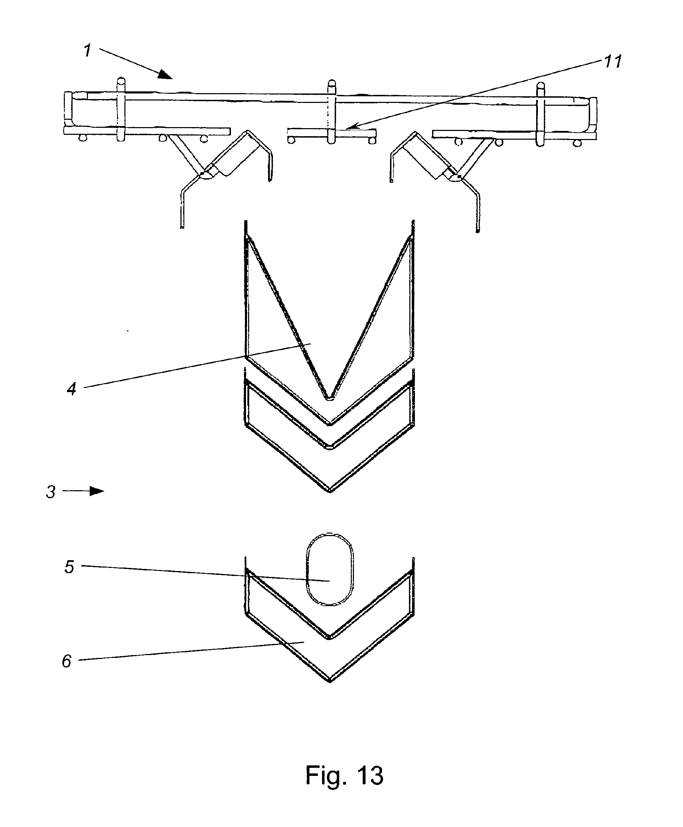

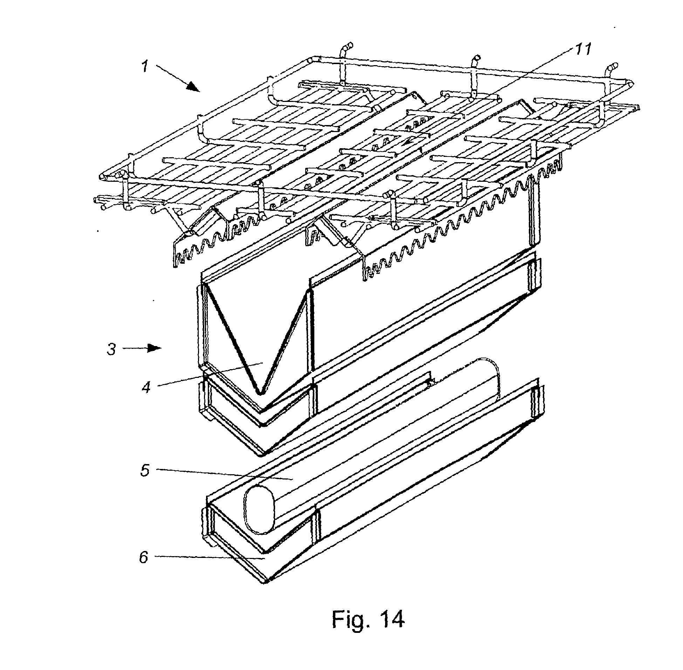

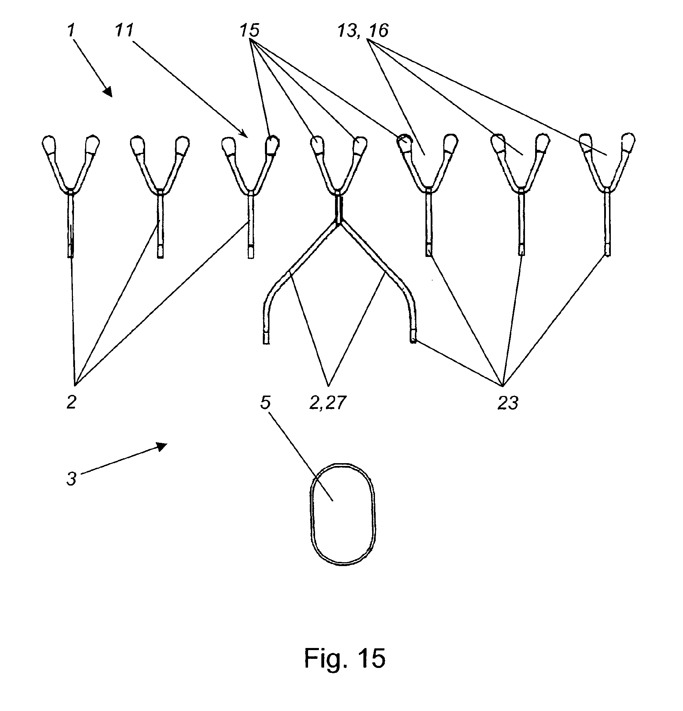

In Fig. 13 und Fig. 14 ist der aus den Fig. 11 und 12 bekannte Gitterrost 1 im Grillgerät 3 angeordnet. Dabei zeigt die Fig. 14 den Aufriss des Grillgerätes und Fig. 15 eine axonometrische Darstellung des Grillgerätes. Der Brenner 5 kann von allen Seiten von dem vom Grillgut ablaufenden Fluid geschützt werden, sodass es zu keinem Verbrennen von Fetten kommen kann. Dieser Schutz kann erstens durch die dachförmigen Elemente 27 erfolgen, welche das Fluid in die Ablaufrinne 4 oder an den Seitenwänden der V-förmigen Abschirmelemente vorbei leiten. Zweitens sollte ein sich vom Boden des Grillgerätes 3 in Richtung des Brenners 5 bewegendes Fluidtröpfchen, welches sich beim Auftreffen von Fluid aus den Grillboden bilden kann, von einem weiteren Abschirmelement 6 vom Brenner 5 ferngehalten werden. Das Abschirmelement 6 und die Ablaufrinne 4 können mit Kühlmittel durchspült werden, um so die Überhitzung dieser Bauteile zu vermeiden. Die auf Brenner 5, Brenneranordnung, Brennerleistung, Grillgutauflagenflächegröße 11 und Abschirmelemente abgestimmte Ausbildung des dachförmigen Elementes 27 kann in seiner asymmetrischen Form die gleichmäßige Temperaturverteilung über den gesamten Bereich der Auflagenfläche 11 unterstützen, womit die Auflagefläche gleichmäßig auf der gesamten Fläche genutzt werden kann. Sowohl Gitterrost 1, Abtropfplatte 2, Ablaufrinne 4, Abschirmelement 6 können zur Reinigung, zum Austausch oder zur Reparatur demontierbar im Grillgerät 3 angeordnet sein.

Das in den Fig. 4, 6, 9, 10, 13 und 14 dargestellte Abschirmelement 6 dient in vorteilhafter Weise auch als Wärmestrahlungsschild dem Boden des Grillgerätes 3 und/oder allgemeiner dem unteren Bereich des Grillgerätes 3. Dazu wird die vom Brenner in alle Richtungen abgestrahlte Infrarot- oder Wärmestrahlung durch den oberen Bereich des Abschirmelementes 6 nach oben in Richtung des Gitterrostes 1 und/oder dem oberen Bereich des Grillgerätes 3 reflektiert. Das gesamte Abschirmelement 6 dient zur Abschirmung vor Wärmestrahlung. Die vom Brenner entwickelte Wärme und Wärmestrahlung kann besser genutzt und die Verluste in Bereichen, in welchen keine Erwärmung erwünscht ist, können verringert werden. Ebenso kann die Isolation des Bodenbereiches des Grillgerätes schwächer ausgebildet werden, wodurch Material, Gewicht und Herstellkosten gesenkt werden können. Durch die Reflexion der Wärmestrahlung kann - ähnlich dem Prinzip einer Projektionslampe - gezielt im Wesentlichen nur der Bereich des Gitterrostes 1 mit Infrarotstrahlung bestrahlt werden, wodurch die Effizienz des gesamten Grillgerätes 3 maximiert wird. Zusätzlich und gleichzeitig aufsteigende Heißluft liefert gleichmäßige Grillergebnisse bei sehr guter Energieausnützung. Das Abschirmelement 6 kann dabei vorteilhafterweise mittig unterhalb des Brenners 5 angeordnet und breiter als der Brenner 5 ausgebildet sein um eine besonders gute Abschirmung der Bodenfläche des Grillgerätes 3 zu ermöglichen. Dabei liegt die Breite des Abschirmelementes 6 in besonders vorteilhafter Weise zwischen der Breite des Brenners 5, und jeweils der Breite des durch ein dachförmiges Element 27 oder durch mehrere dachförmige Elemente 27 und eine Ablaufrinne 4 abgeschirmten Bereiches, sodass der gesamte Bereich senkrecht oberhalb des Abschirmelementes 6 frei von Abtropfbereichen 23 ist oder, wenn dies nicht der Fall ist, dass eine Ablaufrinne 4 zwischen Abtropfbereichen 23 und Abschirmelement 6 angeordnet ist.

Die Fig. 15 zeigt eine weitere mögliche Ausführungsform des erfindungsgemäßen Gitterrostes 1 und einen zentral angeordneten einzelnen Brenner 5. Bei dieser Ausführungsform ist der Brenner 5 - in Betriebslage gesehen - senkrecht unterhalb des dachförmigen Elementes 27 angeordnet und die freien Längskanten 22 des dachförmigen Elementes 27 sind parallel zur Längserstreckung des Brenners 5 angeordnet, wobei der Bereich senkrecht oberhalb des Brenners frei von Abtropfbereichen 23 ausgebildet ist.

Ebenso ist das dachförmige Element 27 mittig oberhalb des Brenners 5 angeordnet und breiter als der Brenner ausgebildet, wobei die Abtropfbereiche 23 des dachförmigen Elementes 27 den Brenner beidseitig überragen, wobei im Betrieb ein Abtropfen von Abtropfbereichen 23 des dachförmigen Elementes 27 am Brenner vorbei erfolgt. Dadurch wird gewährleistet, dass abtropfendes Fluid, welches schwerkraftbedingt senkrecht nach unten fällt, nicht mit der heißen Oberfläche des Brenners 5 in Berührung gelangen kann. Bei dieser fünften Ausführungsform ist keine Ablaufrinne 4 notwendig, da das dachförmige Element 27 den kompletten Bereich oberhalb des Brenners 5 überdacht und somit kein zusätzlicher Fluidschutz des Brenners 5 erforderlich ist.

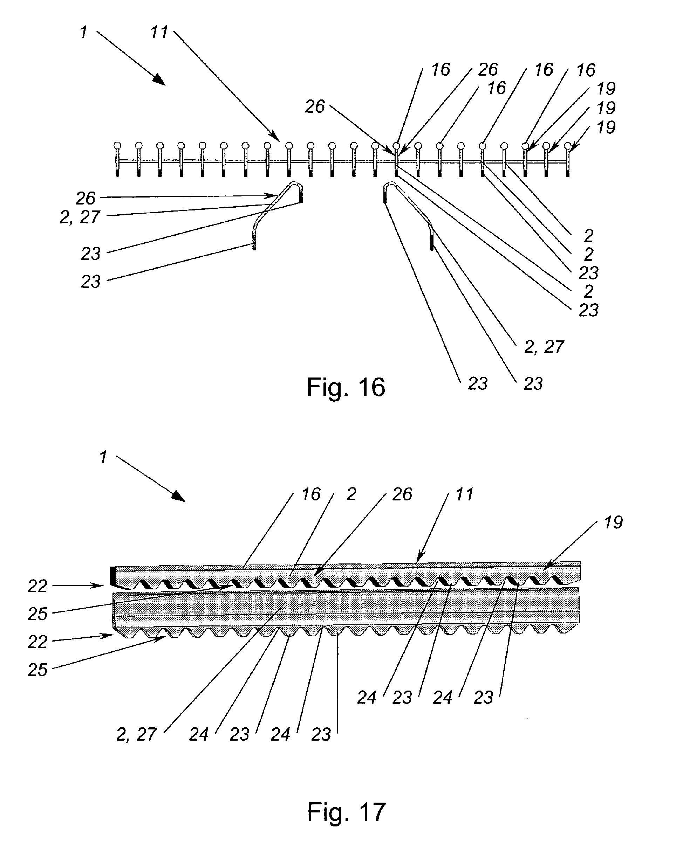

In Fig. 16 bis 19 ist eine besonders bevorzugte sechste Ausführungsform des Gitterrostes 1 in unterschiedlichen Ansichten dargestellt. Bei dieser Ausführungsform ist - wie bei den anderen Ausführungsform ebenfalls - vorgesehen, dass die Auflagefläche 11 durch eine vorbestimmbare Anzahl mehrerer Stabelemente 16 ausgebildet. Weiters ist bei dieser Ausführungsform vorgesehen, dass an wenigstens einem der Stabelemente 16, insbesondere an jedem der Stabelemente 16, an der der Auflagefläche 11 gegenüberliegenden Seite des Stabelements 16 die Abtropfplatte 2 angeordnet ist. Auch hiebei werden die eingangs genannten Vorteile und vorteilhaften Wirkungen ermöglicht.

Insbesondere kann in diesem Zusammenhang vorgesehen sein, dass Stabelement 16 und zusammengehörige Abtropfplatte 2 einstückig ausgebildet sind, womit Stabelement 16 und

Abtropfplatte 2 eine Einheit ausbilden können, welche Einheit als Stababtropfelement 19 bezeichnet werden kann. Dabei weist das Stababtropfelement weiterhin an der freien Längskante 22 eine Vielzahl von Abtropfbereichen 23 auf. Insbesondere kann dabei die freie Längskante 22 - wie in Fig. 16 bis 19 dargestellt - im Wesentlichen nach unten gerichtet sein, wobei die freie Längskante 22 keine weiteren Bauteile des Gitterrostes 1 oder des Grillgerätes 3 kontaktiert.

Insbesondere kann vorgesehen sein, dass die die Auflagefläche 11 ausbildenden Stababtropfelemente 19 miteinander verbunden sind. Bei der sechsten Ausführungsform wird dies dadurch erreicht, dass wenigstens ein Querstab 191, insbesondere wenigstens zwei Querstäbe 191, die Abtropfplatten 2 miteinander verbinden. Derart kann der gesamte Gitterrost 1 einfach und schnell vom Grillgerät 3 entfernt und in diesen eingesetzt werden.

Die Verbindung zwischen dem Querstab 191 und den Abtropfplatten 2 kann lösbar ausgebildet sein. Beispielsweise kann dazu der Querstab 191 entlang dessen Längserstreckung relativ zu den Abtropfplatten 2 verschoben werden.

Die Verbindung zwischen dem Querstab 191 und den Abtropfplatten 2 kann unlösbar ausgebildet sein, womit die Stababtropfelemente 19 und der wenigstens eine Querstab 191 einstückig ausgebildet sein. Beispielsweise kann dazu der Querstab 191 mit den Abtropfplatten 2 verschweißt sein. Der derart einstückig ausgebildete Gitterrost 1 kann dabei besonders stabil ausgebildet sein, womit dieser besonders einfach und schnell vom Grillgerät 3 entfernt und in diesen eingesetzt werden kann.

Bei einer Weiterbildung der sechsten Ausführungsform kann vorgesehen sein, dass Stabelement 16 und zugehörige Abtropfplatte 2 voneinander trennbar sind.

Insbesondere kann vorgesehen sein dass - in Betriebslage des Gitterrostes 1 gesehen - unter den Stababtropfelementen 19 wenigstens eines der - vorstehend näher beschriebenen - dachförmigen Elemente 27 angeordnet ist, wie dies in Fig. 16 bis 19 dargestellt ist.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Gitterrost (1) umfassend mehrere Stabelemente (16), welche beabstandet, parallel und in einer Ebene eine Auflagefläche (11) für Grillgut ergeben, **dadurch gekennzeichnet, dass** an der der Auflagefläche (11) gegenüberliegenden Seite wenigstens eine Abtropfplatte (2) angeordnet ist, und dass die wenigstens eine Abtropfplatte (2) an zumindest einer freien Längskante (22) eine Vielzahl von Abtropfbereichen (23) aufweist, wobei die Abtropfbereiche (23) im Betrieb ein gezieltes Abtropfen von aus Grillgut ablaufendem Fluid in dem jeweiligen Abtropfbereich (23) bewirken.

2. Gitterrost (1) nach Anspruch 1, **dadurch gekennzeichnet, dass** die freie Längskante (22) der Abtropfplatte (2) zwischen den Abtropfbereichen (23) Vertiefungen (24) aufweist.

3. Gitterrost (1) nach einem der vorhergehenden Ansprüche, **dadurch gekennzeichnet, dass** die freie Längskante (22) mit einer zickzackförmigen, wellenförmigen oder periodischen Profilierung (25) ausgebildet ist.

4. Gitterrost (1) nach einem der vorhergehenden Ansprüche, **dadurch gekennzeichnet, dass** die Abtropfplatte (2) an der der Auflagefläche (11) gegenüberliegenden Seite des Stabelements (16) angeordnet ist.

5. Gitterrost (1) nach einem der vorhergehenden Ansprüche, **dadurch gekennzeichnet, dass** sich die Abtropfplatte (2) im Wesentlichen über die gesamte Länge des Gitterrostes (1) erstreckt.

6. Gitterrost (1) nach einem der vorhergehenden Ansprüche, **dadurch gekennzeichnet, dass** die Fläche (26) der Abtropfplatte (2) eine Strukturierung, vorzugsweise Riffelung, aufweist.

7. Gitterrost (1) nach einem der vorhergehenden Ansprüche, **dadurch gekennzeichnet, dass** die Abtropfplatte (2) - in Gebrauchslage gesehen - als dachförmiges Element (27) ausgebildet ist.

8. Gitterrost (1) nach Anspruch 7, **dadurch gekennzeichnet, dass** das dachförmige Element (27) asymmetrisch ausgebildet ist.

9. Gitterrost (1) nach einem der Ansprüche 7 oder 8, **dadurch gekennzeichnet, dass** die Schnittkante der Schenkel (28) des zumindest einen dachförmigen Elementes (27) aus der Ebene der Stabelemente (16) hervorragt.

10. Gitterrost (1) nach einem der vorhergehenden Ansprüche, **dadurch gekennzeichnet, dass** die Auflagefläche (11) von einem Begrenzungselement (17) berandet ist, wobei das Begrenzungselement (17) im Betrieb einen Kontakt von Grillgut mit den Wänden eines Grillgerätes vermeidet.

11. Grillgerät (3), **dadurch gekennzeichnet, dass** es einen Gitterrost (1) nach einem der vorhergehenden Ansprüche aufweist.

12. Grillgerät (3) nach Anspruch 11, **dadurch gekennzeichnet, dass** zumindest ein Brenner (5) vorgesehen ist.

13. Grillgerät (3) nach Anspruch 12, **dadurch gekennzeichnet, dass** es zumindest eine Ablaufrinne (4) aufweist, und dass die zumindest eine Ablaufrinne (4) - in Betriebslage gesehen - unter der freien Längskante (22) der wenigstens einen Abtropfplatte (2) angeordnet ist, und dass der Brenner (5) - in Betriebslage gesehen - unterhalb der Ablaufrinne (4) angeordnet ist.

14. Grillgerät (3) nach Anspruch 12 oder 13, **dadurch gekennzeichnet, dass** der Brenner (5) - in Betriebslage gesehen - senkrecht unterhalb des dachförmigen Elementes (27) angeordnet ist und die freien Längskanten (22) des dachförmigen Elementes (27) parallel zur Längserstreckung des Brenners (5) angeordnet sind, wobei der Bereich senkrecht oberhalb des Brenners (5) frei von Abtropfbereichen (23) ausgebildet ist.

15. Grillgerät (3) nach einem der Ansprüche 12 bis 14, **dadurch gekennzeichnet, dass** das dachförmige Element (27) mittig oberhalb des Brenners (5) angeordnet und breiter als der Brenner ausgebildet ist, wobei die Abtropfbereiche (23) des dachförmigen Elementes (27) den Brenner beidseitig überragen, wobei im Betrieb ein Abtropfen von aus Grillgut ablaufendem Fluid von den Abtropfbereichen (23) des dachförmigen Elementes (27) am Brenner vorbei erfolgt.
